# EUROPEAN PATENT SPECIFICATION

(11) **EP 3 470 011 B1**
(45) Date of publication and mention of the grant of the patent: **04.05.2022**
(21) Application number: 17809887.7
(22) Date of filing: 28.02.2017
(51) Int. Cl.: A61C 13/01

(54) **DENTURE SYSTEM**
ZAHNPROTHESENSYSTEM
SYSTÈME DE PROTHÈSE DENTAIRE

(30) Priority: 08.06.2016 WO PCT/JP2016/067058
(43) Date of publication of application: 17.04.2019
(73) Proprietor: Sunrise Associates Corporation, Yokkaichi-shi, Mie 512-0904 (JP)
(72) Inventor: NAKAO Yoshiharu, Yokkaichi-shi Mie 510-0812 (JP)
(74) Representative: Bals & Vogel Patentanwälte PartGmbB
(86) International application number: PCT/JP2017/007942
(87) International publication number: WO 2017/212703

(56) References cited:
- WO-A1-2013/136309
- WO-A1-2015/030166
- DE-A1-102007 002 178
- JP-A- 2013 135 863
- JP-A- 2015 165 850
- JP-B2- 4 686 541

## Description

### TECHNICAL FIELD

The technique disclosed herein relates to a dental prosthesis system.

### BACKGROUND ART

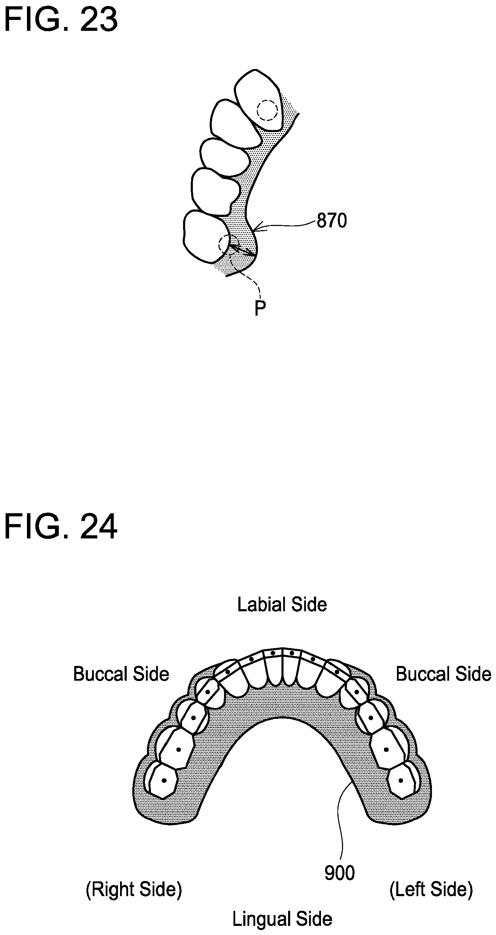

Patent Literature 1 describes an overdenture. An overdenture is a dental prosthesis that can be self-worn by a user, and refers to a denture that has a support structure using an implant and the like planted in an alveolar bone. An example of a maxillary overdenture is shown in FIG. 24. A reference sign 900 in FIG. 24 shows an outer edge of the overdenture on a lingual side. As apparent from FIG. 24, a portion contacting a palate in this overdenture is small (it is a so-called palatless overdenture), and comfortability upon wearing this dental prosthesis is improved.

DE 10 2007 002 178 A1 shows a method of manufacturing a base part of an artificial dentition or of an artificial denture comprising a base part. WO 2015/030166 A1 discloses an engaging piece for a denture system. WO 2013/136309 A1 relates to an implant rehabilitation dental system with fixed prosthesis.

### Citation List

### Patent Literature

Patent Literature 1: JP 5566525 B1

### SUMMARY OF INVENTION

### Technical Problem

It has been long thought that the overdenture shown in FIG. 24 was an actual limit to a size of a dental prosthesis on a lingual side (in other words, a position of an outer edge of the dental prosthesis). As a result, a structure that excels over the comfortability of wearing the overdenture shown in FIG. 24 was not recognized.

The description herein provides a dental prosthesis system that further improves wearing comfortability and a dental prosthesis used in the dental prosthesis system. Solution to Technical Problem

The technical problem can be solved by a dental prosthesis system according to independent claim 1. Further advantageous examples of the dental prosthesis system according to the invention are described in the dependent claims.

As described earlier, the overdenture shown in FIG. 24 had long been considered as a limit of a size of the dental prosthesis on the lingual side. However, as a result of keen study conducted by the present inventor, it has been found that the size of the dental prosthesis on the lingual side can further be reduced (in other words, a position of the outer edge of the dental prosthesis on the lingual side can be moved further toward a facial side). Further, it has also been found that when the outer edge of the dental prosthesis is located on the facial side beyond a certain position, comfortability thereof significantly improves. Specifically, in a study conducted regarding wearing comfortability by gradually shortening lengths of d1 and d2 in first reference cross-sections, it has been found that the comfortability significantly improves when d1 and d2 are 20 mm. The dental prosthesis system as above satisfies d1 ≤ 20 mm and d2 ≤ 20 mm. Due to this, this dental prosthesis system can further improve the wearing comfortability.

A "plan view" herein means to see the dental prosthesis along a direction perpendicularly intersecting a horizontal surface in a state where the dental prosthesis is attached to an articulator placed on the horizontal surface.

Further, "a center of a prosthetic tooth (in the plan view)" herein means a center of an incisal edge (tipmost end portion of crown) for the incisal portion (first to third teeth), and means a center of an occlusal surface for the occlusal portion (fourth to seventh teeth). Here, the "center of the incisal edge" is defined as a middle point of a line connecting a middle point of a lingual-side line of the incisal edge and a middle point of a labial-side line thereof. Further, the "center of the occlusal surface" is defined as a middle point of a line on the occlusal surface, where the line connects a widthwise middle point of a lingual-side line of the occlusal surface (which is a line on the lingual side extending from a boundary with an adjacent prosthetic tooth on a mesial side (in a direction approaching a midline) to a boundary with an adjacent prosthetic tooth on a distal side (in a direction separating away from the midline)) and a widthwise middle point of a buccal side thereof (which is a line on the buccal side extending from the boundary with the adjacent prosthetic tooth on the mesial side to the boundary with the adjacent prosthetic tooth on the distal side). Here, the "width direction" means a direction parallel to a plane perpendicularly intersecting a plan view direction.

Further, the "first reference cross-sections" herein are defined as cross sections that include the first reference lines and are parallel to the plan view direction.

Further, the "base end point of the tooth surface" herein means an uppermost end portion of the tooth surface on a facial side in a maxillary dental prosthesis and means a lowermost end portion of the tooth surface on the facial side in a mandibular dental prosthesis in the first reference cross-sections and in second reference cross-sections to be described later.

"Second reference lines" herein are each defined as a line connecting the middle point of the lingual-side line of the incisal edge and the labial-side line thereof for the incisal portion, and as a line connecting the widthwise middle point of the lingual-side line of the occlusal surface and the widthwise middle point of the buccal-side line thereof for the occlusal portion.

Further, the "second reference cross-sections" are defined as cross sections that include the second reference lines and are parallel to the plan view direction.

### BRIEF DESCRIPTION OF DRAWINGS

FIG. 1 is a schematic cross-sectional view seeing a dental prosthesis system according to a first example from a front side, and is a cross-sectional view passing through a center axis of a fixture.
FIG. 2 is a plan view of a dental prosthesis in a state where the dental prosthesis is arranged inside an oral cavity.
FIG. 3 is a plan view of an incisal edge of a left mandibular lateral incisor.
FIG. 4 is a plan view near an occlusal surface of a left mandibular first molar.
FIG. 5 is a first reference cross-sectional view of the left mandibular lateral incisor along a line V-V of FIG. 2.
FIG. 6 is a first reference cross-sectional view of a left mandibular second premolar along a line VI-VI of FIG. 2.
FIG. 7 is a side view of the dental prosthesis when dental prostheses for both jaws are arranged in the oral cavity and are in a centric occlusion.
FIG. 8 is a side view of the dental prosthesis when the dental prostheses for both jaws are arranged in the oral cavity and a mandible starts to move forward from the centric occlusion.
FIG. 9 is a side view of the dental prosthesis when the dental prostheses for both jaws are arranged in the oral cavity and the mandible moves leftward and enters a state in which a mandibular canine contacts a maxillary canine.
FIG. 10 shows an implant (once-piece structure) of a variant 1.
FIG. 11 is a schematic cross-sectional view seeing a dental prosthesis system according to a second example from a front side, and is a cross-sectional view passing through a center axis of a fixture.
FIG. 12 is a plan view of a dental prosthesis in a state where the dental prosthesis is arranged inside an oral cavity.
FIG. 13 is a first reference cross-sectional view of a left mandibular lateral incisor along a line XIII-XIII of FIG. 12.
FIG. 14 is a first reference cross-sectional view of a left mandibular second premolar along a line XIV-XIV of FIG. 12.
FIG. 15 is a plan view of a dental prosthesis of a dental prosthesis system according to a third example in a state of being arranged inside an oral cavity.
FIG. 16 is a second reference cross-sectional view of a left mandibular lateral incisor along a line XVI-XVI of FIG. 15.
FIG. 17 is a second reference cross-sectional view of a left mandibular second premolar along a line XVII-XVII of FIG. 15.
FIG. 18 is a plan view of a dental prosthesis of a dental prosthesis system according to a fourth example in a state of being arranged inside an oral cavity.
FIG. 19 is a plan view of a dental prosthesis of a dental prosthesis system according to a fifth example in a state of being arranged inside an oral cavity.
FIG. 20 is a diagram schematically showing a dental prosthesis system according to a sixth example.
FIG. 21 is a diagram schematically showing a part of a dental prosthesis of a dental prosthesis system according to a variant.
FIG. 22 is a diagram schematically showing a part of a dental prosthesis of a dental prosthesis system according to another variant.
FIG. 23 is a diagram schematically showing a part of a dental prosthesis of a dental prosthesis system according to yet another variant.
FIG. 24 is a plan view of a conventional (maxillary) overdenture.

### DESCRIPTION OF EXAMPLES

Firstly, features of examples to be described below will be listed. The features listed herein are each independently useful.

(Feature 1) In a dental prosthesis system disclosed herein, in a case where a dental prosthesis is arranged in an oral cavity of the user and is in a centric occlusion or a centric relation, at least a part of a mandibular occlusal portion may contact a maxillary occlusal portion while mandibular central and lateral incisors do not contact maxillary central and lateral incisors, and upon when a mandible starts to move forward from a state of being in the centric occlusion or the centric relation, at least the part of the mandibular occlusal portion may move forward in a state of maintaining contact with the maxillary occlusal portion.

Conventionally, upon when the mandible starts to move forward from the centric occlusion or the centric relation, it had been considered as that a favorable occlusal includes a molar disocclusion (phenomenon in which the mandibular occlusal portion separates away from the maxillary occlusal portion) caused by anterior guidance. In this configuration, the central and lateral incisors of both jaws become primary contact surfaces during the forward movement of the mandible, thus there has been a problem that a large occlusal pressure is applied to the central and lateral incisors. However, in the configuration disclosed herein, the molar disocclusion does not occur upon when the mandible starts to move forward from the state of being in the centric occlusion or the centric relation, and the movement continues forward while at least a part of the mandibular occlusal portion maintains contact with the maxillary occlusal portion. Due to this, the occlusal pressure in the forward movement of the mandible can be received by contact surfaces of the occlusal portions of both jaws as well. According to this configuration, the occlusal pressure acting on the central and lateral incisors can significantly be reduced, and the occlusal pressure burden can be distributed to respective teeth. As such, a member configuring the dental prosthesis system can be suppressed from being damaged due to the large occlusal pressure. Further, the dental prothesis can be suppressed from becoming unbalanced or detached (tip over) upon the forward movement of the mandible.

The technique described in Feature 1 may be applied independently to other dental prosthesis systems (such as conventionally-known dental prosthesis systems (overdenture, false teeth, and the like)). By applying the technique described in Feature 1 to the conventional dental prosthesis systems, the occlusal pressure acting on the dental prosthesis can be reduced, and damages to the dental prosthesis can be suppressed.

(Feature 2) In the dental prosthesis system disclosed herein, in a state where the dental prosthesis is arranged in the oral cavity of the user and a mandible moves laterally by which a mandibular canine contacts a maxillary canine, at least a part of a mandibular occlusal portion on a moving direction side may contact a maxillary occlusal portion on the moving direction side.

In a conventional canine guidance, there has been a problem that a large occlusal pressure acts on the canines since only the canines of both jaws contact upon when the mandible moves laterally while the occlusal portions are separated. However, in the configuration disclosed herein, at least a part of the mandibular occlusal portion contacts the maxillary occlusal portion in a state where the mandible moves laterally and the canines of both jaws are in contact. Due to this, the occlusal pressure in the state where the mandible moves laterally and the canines of both jaws are in contact can be reduced by the contact surfaces of the occlusal portions of both jaws as well. According to this configuration, the occlusal pressure acting on the canines can significantly be reduced, and the occlusal pressure burden can be distributed to respective teeth. As such, a member configuring the dental prosthesis system at a canine portion can be suppressed from being damaged due to the large occlusal pressure. Further, the dental prothesis can be suppressed from becoming unbalanced or tipped over upon the lateral movement of the mandible.

Similar to Feature 1, the technique described in Feature 2 may be applied independently to other dental prosthesis systems (such as the conventionally-known dental prosthesis systems (overdenture, false teeth, and the like)). By applying the technique described in Feature 2 to the conventional dental prosthesis systems, the occlusal pressure acting on the dental prosthesis can be reduced, and damages to the dental prosthesis can be suppressed.

(Feature 3) In the dental prosthesis system disclosed herein, at least a portion of the dental prosthesis where the incurved contact surface is to be provided may be constituted of a material having Young's modulus of 70 to 267kgf/mm⁻². According to this configuration, the portion where the incurved contact surface is to be provided has a relatively high elasticity. Due to this, when external force acts on the dental prosthesis, this portions warps to suitably absorb the occlusal pressure. As a result, the occlusal pressure transmitted to other members configuring the dental prosthesis system can be reduced, and durability of these members can be improved.

(Feature 4) The dental prosthesis system disclosed herein may further comprise a fixture planted in an alveolar bone; and an abutment. The abutment may be connected to the fixture and may include an exposed part that is exposed from a gingiva covering an alveolar bone. A dental prosthesis may include an engagement hole to which the exposed part of the abutment is configured to engage, and the dental prosthesis may be configured to be attached to and detached from the abutment by the exposed part being engaged with the engagement hole and disengaged therefrom by the user. First and second reference cross-sections as described earlier are not defined for a prosthetic tooth corresponding to a position where the fixture is planted.

(Feature 5) The dental prosthesis system disclosed herein may further comprise an implant. The implant may comprise a fixture section planted in an alveolar bone, and an abutment section configured integrally with the fixture section and including an exposed part that is exposed from the gingiva covering the alveolar bone. The dental prosthesis may include an engagement hole to which the exposed part of the abutment section is configured to engage, and the dental prosthesis may be configured to be attached to and detached from the abutment section by the exposed part being engaged with the engagement hole and disengaged therefrom by the user.

(Feature 6) The dental prosthesis system disclosed herein may further comprise an attachment attached to a natural dental root and including an exposed part that is exposed from the gingiva covering the alveolar bone. The dental prosthesis may include an engagement hole to which the exposed part of the attachment is configured to engage, and the dental prosthesis may be configured to be attached to and detached from the attachment by the exposed part being engaged with the engagement hole and disengaged therefrom by the user.

(Feature 7) The dental prosthesis system disclosed herein may comprise a partial dental prosthesis, and this partial dental prosthesis may further comprise a prosthetic or natural abutment tooth. The dental prosthesis may include one of a clasp, a wing, and an outer crown for Konus to be engaged with the abutment tooth, and the dental prosthesis may be configured to be attached to and detached from the abutment tooth by one of: engaging one of the clasp and the wing to the abutment tooth and detaching the clasp or the wing therefrom, and engaging the outer crown to an inner crown provided in the abutment tooth and detaching the outer crown therefrom.

### First Example

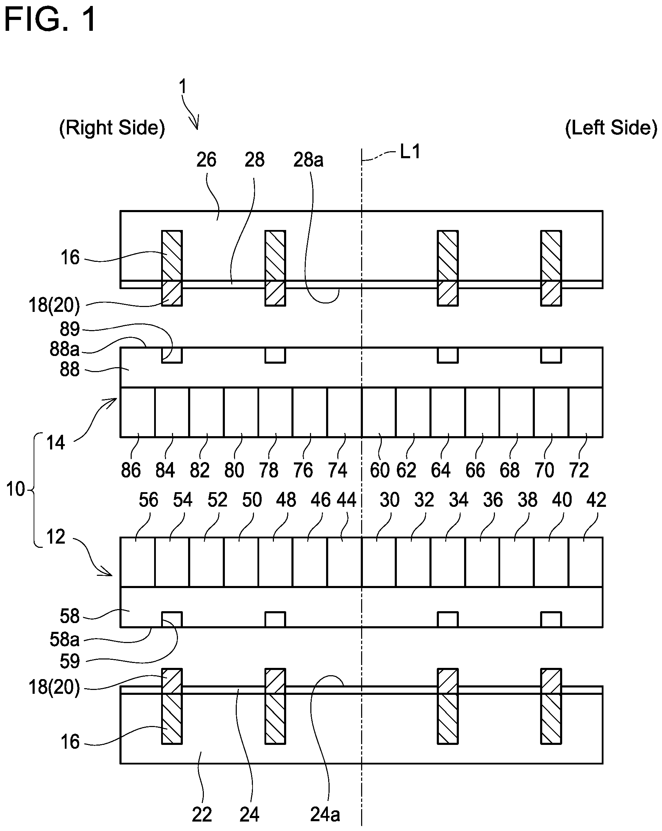

A dental prosthesis system 1 according to a first example will be described with reference to FIGS. 1 to 10. As shown in FIG. 1, the dental prosthesis system 1 is provided with a dental prosthesis 10, fixtures 16, and abutments 18. The dental prosthesis 10 is provided with a mandibular dental prosthesis 12 and a maxillary dental prosthesis 14. A surface of a mandibular alveolar bone 22 is covered by a gingiva 24. A surface of a maxillary alveolar bone 26 is covered by a gingiva 28. The mandibular alveolar bone 22 and the maxillary alveolar bone 26 respectively have four fixtures 16 planted therein through the gingivae 24, 28. Each of the fixtures 16 has one abutment 18 connected thereto. Center axes of the fixture 16 and the abutment 18 match. A height of a connection surface of the fixture 16 and the abutment 18 is equal to a height of a surface of corresponding one of the alveolar bones 22, 26 (bone level implant). A part of each abutment 18 is exposed from the corresponding one of the gingivae 24, 28. Hereinbelow, this exposed portion will be termed an exposed part 20. Known structures may be employed as the fixtures 16 and the abutments 18.

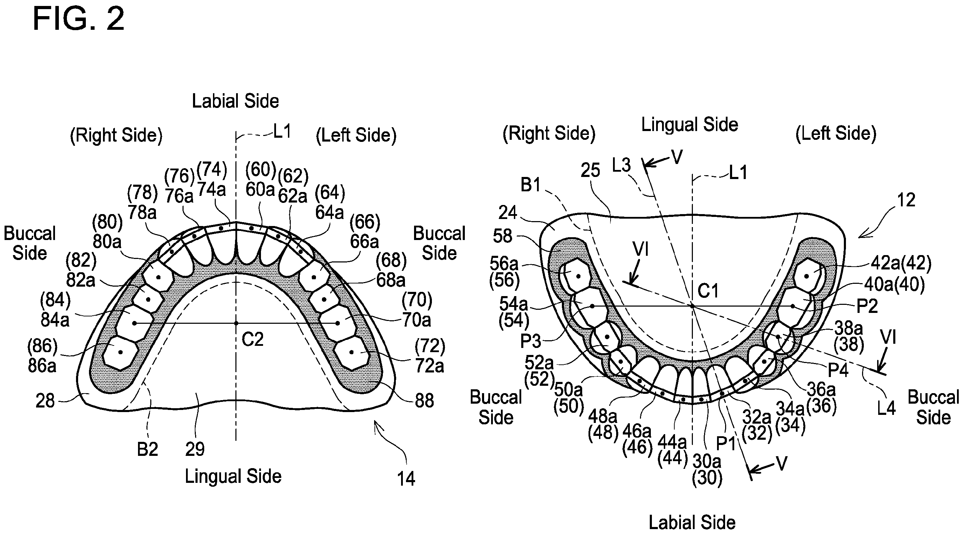

As shown in FIGS. 1 and 2, the dental prostheses 12, 14 are dental prostheses for edentulous jaws (complete dental prostheses). The "edentulous jaw" herein refers to a jaw in a state where no natural crowns remain. Due to this, even in a case where natural dental roots remain within an alveolar bone, such a state will be classified as an "edentulous jaw" if no natural crowns remain. The dental prosthesis 12 is attached to the mandibular gingiva 24 and the dental prosthesis 14 is attached to the maxillary gingiva 28.

The dental prosthesis 12 is provided with fourteen prosthetic teeth 30 to 56 and a base 58. The prosthetic teeth 30 to 56 are constituted of porcelain. The prosthetic teeth 30 to 56 resemble outer appearances of natural teeth, and are arranged in accordance with an arrangement of the natural teeth. Specifically, first prosthetic teeth 30, 44 from a midline L1 function as central incisors, second prosthetic teeth 32, 46 function as lateral incisors, third prosthetic teeth 34, 48 function as canines, fourth prosthetic teeth 36, 50 function as first premolars, fifth prosthetic teeth 38, 52 function as second premolars, sixth prosthetic teeth 40, 54 function as first molars, and seventh prosthetic teeth 42, 56 function as second molars.

The base 58 is constituted of a polyamide-based material, such as nylon. Nylon has high durability, light weight, and high elasticity, and has a Young's modulus of 70 to 267kgf/mm⁻². The base 58 resembles an outer appearance of a natural gingiva, and is bonded to lower portions of the prosthetic teeth 30 to 56 (that is, on an alveolar bone 22 side). The base 58 is provided with four engagement holes 59 that are to be engaged with the exposed parts 20 at positions corresponding to the exposed parts 20 of the abutments 18. More specifically, the engagement holes 59 are respectively provided in the base 58 located below the canines 34, 48 and in the base 58 located below the first molars 40, 54. In other words, the respective fixtures 16 are planted in the alveolar bone 22 located below the canines 34, 48 and in the alveolar bone 22 located below the first molars 40, 54. By engaging the exposed parts 20 to the engagement hole 59, the dental prosthesis 12 is arranged inside an oral cavity of a user (more specifically, the dental prosthesis 12 is fixed to the gingiva 24). In this state, a lower surface 58a of the base 58 contacts a surface 24a of the gingiva 24 (hereinbelow, the lower surface of the base 58 will be termed a "contact surface"). The dental prosthesis 12 is configured to be attached to and detached from the abutments 18 by the exposed parts 20 being engaged with and disengaged from the engagement holes 59 by the user.

As a structure to engage the exposed parts 20 and the engagement holes 59, a known structure may be employed. For example, structures such as a structure described in JP 5566525 B1, a ball attachment, an O-ring attachment, a magnet attachment, and a locator attachment may be exemplified. The material of the prosthetic teeth 30 to 56 is not limited to porcelain, and may be zirconia, hybrid, hard resin, polyamide-based material (such as nylon) may be used. Further, the material of the base 58 is not limited to the polyamide-based material, and materials having durability, being relatively light-weight, and having elasticity (typically, having a Young's modulus of 70 to 267kgf/mm⁻²) may suitably be used. Further, the material used in the base may not necessarily have the aforementioned elasticity, and for example, a material with inferior elasticity than the aforementioned material (such as sulfone, resin material such as acrylic resin, or metallic material such as titanium, cobalt, gold-platinum alloy) may be used. In a case where a material with excellent elasticity is used as the base, an occlusal pressure can thereby be reduced, so an occlusal technique described below may not necessarily be employed.

The dental prosthesis 14 has a substantially identical configuration as the dental prosthesis 12. That is, the dental prosthesis 14 is provided with fourteen prosthetic teeth 60 to 86 and a base 88. Names of the prosthetic teeth counting from the midline L1 are same as the prosthetic teeth 30 to 56 of the dental prosthesis 12. The base 88 is bonded to upper portions of the prosthetic teeth 60 to 86 (that is, on an alveolar bone 24 side). The base 88 is provided with four engagement holes 89 that are to be engaged with the exposed parts 20 respectively in the base 88 located above the canines 64, 78 and the base 88 located above the first molars 70, 84. By engaging the exposed parts 20 to the engagement hole 89, the dental prosthesis 14 is fixed to the gingiva 28. In this state, an upper surface 88a of the base 88 contacts an upper surface 28a of the gingiva 28. The dental prosthesis 14 is configured to be attached to and detached from the abutments 18 by the exposed parts 20 being engaged with and disengaged from the engagement holes 89 by the user. The positions for providing the engagement holes 89 (that is, the positions for planting the fixtures 26) may not correspond to the positions for providing the engagement holes 59. Further, the positions for providing the engagement holes 59, 89 and numbers thereof are not limited to the above configuration, and may be determined by taking user's occlusal force into consideration.

FIG. 2 shows a plan view of the dental prostheses 12, 14 in a state where the dental prostheses 12, 14 are arranged in the oral cavity. For clearer view of the drawing, the bases 58, 88 are shown in grayscale in FIG. 2. Shapes of the dental prostheses 12, 14 in this plan view matches shapes of the dental prostheses 12, 14 when the dental prostheses 12, 14 are seen along a direction perpendicularly intersecting a horizontal surface in a state where the dental prostheses 12, 14 are attached to an articulator placed on the horizontal surface.

As shown in FIG. 2, the respective prosthetic teeth 30, 32, 34, 44, 46, 48 in an incisal portion (first to third teeth) of the dental prosthesis 12 have incisal edges 30a, 32a, 34a, 44a, 46a, 48a at their tipmost end of crowns. The respective prosthetic teeth 36, 38, 40, 42, 50, 52, 54, 56 in an occlusal portion (fourth to seventh teeth) of the dental prosthesis 12 have occlusal surfaces 36a, 38a, 40a, 42a, 50a, 52a, 54a, 56a. Black dots on the incisal edges 30a to 34a, 44a to 48a and black dots on the occlusal surfaces 36a to 42a, 50a to 56a respectively show centers of the incisal edges and centers of the occlusal surfaces.

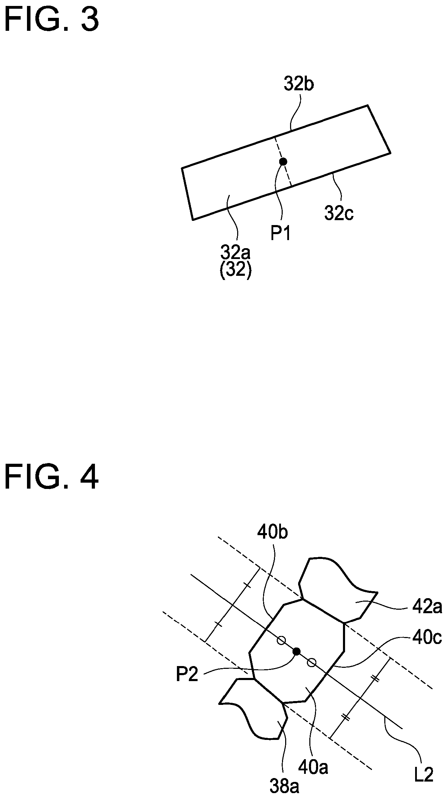

A method of identifying the centers of the incisal edges and the occlusal surfaces will be described with reference to FIGS. 3 and 4. As shown in FIG. 3, a center P1 of an incisal edge 32a (incisal edge of the lateral incisor 32) is defined as a middle point of a line (shown by a broken line in FIG. 3) connecting a middle point of a lingual-side line 32b and a labial-side line 32c of the incisal edge 32a. The centers of the incisal edges other than the incisal edge 32a can be identified by similar definition. Further, as shown in FIG. 4, a center P2 of an occlusal surface 40a (occlusal surface of the first molar 40) is defined as a middle point of a line L2 on the occlusal surface 40a, where the line L2 connects a widthwise middle point of a lingual-side line 40b of the occlusal surface 40a (which is a line extending from a boundary with an adjacent prosthetic tooth on a mesial side (in a direction approaching the midline L1) to a boundary with an adjacent prosthetic tooth on a distal side (in a direction separating away from the midline L1)) and a widthwise middle point of a buccal-side line 40c thereof (which is a line on a buccal side extending from the boundary with the adjacent prosthetic tooth on the mesial side to the boundary with the adjacent prosthetic tooth on the distal side). The centers of the occlusal surfaces other than the occlusal surface 40a can be identified by similar definition. However, for the second molar 42, a lingual-side line of its occlusal surface 42a is define as a line extending from a most-protruded point of the occlusal surface 42a in seeing the occlusal surface 42a along a direction perpendicularly intersecting a dental arch (a curved line defined by teeth row) from the lingual side to a boundary with the first molar 40 on the lingual side. Similarly, a buccal-side line of the occlusal surface 42a is defined as a line extending from the most-protruded point to the boundary with the first molar 40 on the buccal side. The same applies to the second molar 56.

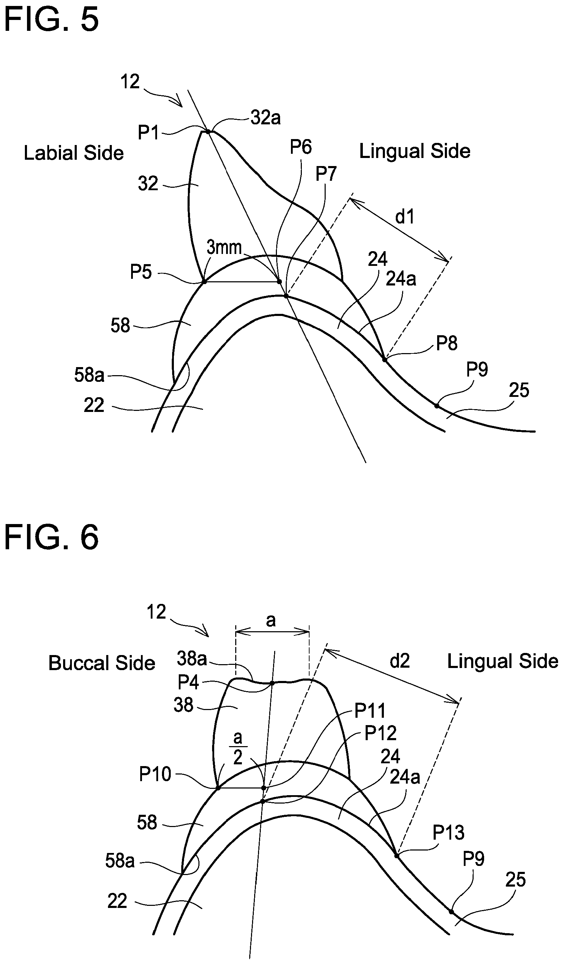

Hereinbelow, lines connecting a middle point C1 of a line connecting the center P2 of the occlusal surface 40a of the first molar 40 and a center P3 of an occlusal surface 54a of the first molar 54 and respective centers of incisal edges and the occlusal surfaces of the respective prosthetic teeth 30 to 56 will be termed "first reference lines". Further, cross sections that include the first reference lines and are parallel to the plan view direction will be termed "first reference cross-sections". A line L3 in FIG. 2 is the first reference line connecting the middle point C1 and the center P1 of the incisal edge 32a of the lateral incisor 32, and a line L4 is the first reference line connecting the middle point C1 and a center P4 of an occlusal surface 38a of the second premolar 38. FIG. 5 is the first reference cross-section including the line L3 (that is, a cross section of the lateral incisor 32), and FIG. 6 is the first reference cross-section including the line L4 (that is, a cross section of the second premolar 38).

The base 58 on the lingual side will be described in further detail with reference to FIGS. 2, 5, and 6. As shown in FIGS. 5 and 6, a contact surface 58a of the base 58 has a concaved shape, and contacts the surface 24a of the gingiva 24. This feature stands true not only for the base 58 in the first reference cross-section, but for an entirety of the base 58. A point P5 is a base end point of a tooth surface of the lateral incisor 32 on a labial side (a lowermost portion, which is in other words, a boundary between the tooth surface on the labial side and the base 58). A point P6 is a point that is offset parallel to the line L3 from the point P5 by 3 mm to a lingual side. A point P7 is an intersection of the contact surface 58a and a line connecting the points P1 and P6. A point P8 is an outer edge of the base 58 on the lingual side (which is in other words, a boundary between the base 58 and the gingiva 24 on the lingual side). The base 58 is marginally sealed with respect to the gingiva 24. Further, the outer edge of the base 58 on the lingual side is smoothly connected to the surface 24a of the gingiva 24 at the point P8. This feature stands true not only for the base 58 in the first reference cross-section, but for the entirety of the base 58. Due to this, the user of the dental prosthesis 12 can be avoided from sensation of a foreign body even if a tongue touches the point P8, by which wearing comfortability of the dental prosthesis 12 can be improved. The point P7 corresponds to an example of a "first point".

In this example, a position of the outer edge of the base 58 is designed so that a distance d1 between the points P7 and P8 satisfies 0 mm < d1 ≤ 20 mm. This stands true also, among the five other teeth in the incisal portion, in the first reference cross-sections of the prosthetic teeth except for the prosthetic teeth located above the base 58 where the engagement holes 59 are provided. That is, the above stands true in the first reference cross-sections of the prosthetic teeth 30, 44, 46 except for the canines 34, 48.

Further, as shown in FIG. 6, "a" is a buccolingual diameter of the occlusal surface 38a. A point P10 is a base end point (lowermost end portion) of a tooth surface of the second premolar 38 on the buccal side. A point P11 is a point that is offset parallel to the line L4 from the point P10 by "a/2" to the lingual side. A point P12 is an intersection of the contact surface 58a and a line connecting the points P4 and P10. A point P13 is the outer edge of the base 58 on the lingual side. The point P12 corresponds to an example of a "second point".

In this example, the position of the outer edge of the base 58 is designed so that a distance d2 between the points P12 and P13 is satisfies 0 mm < d2 ≤ 20 mm. This stands true also, among the seven other teeth in the occlusal portion, in the first reference cross-sections of the prosthetic teeth except for the prosthetic teeth located above the base 58 where the engagement holes 59 are provided. That is, the above stands true in the first reference cross-sections of the prosthetic teeth 36, 42, 50, 52, 56 except for the first molars 40, 54.

In this example, position of the outer edge of the base 58 is designed so that d1 in the first reference cross-sections of the incisal portion satisfies 0 mm < d1 ≤ 20 mm and d2 in the first reference cross-sections of the occlusal portion satisfies 0 mm < d2 ≤ 20 mm. By setting 0 mm < d1 and 0 mm < d2, the dental prosthesis 12 can suitably be fixed to the gingiva 24. Further, by setting d1 ≤ 20 mm and d2 ≤ 20 mm, discomfort upon wearing the dental prosthesis can be significantly reduced as compared to a configuration in which at least one of d1 and d2 is greater than 20 mm. Shorter distances d1, d2 are more preferable. The distances d1, d2 may be set to any value so long as their upper limit values are equal to or less than 20 mm, and may for example be set in a range of 20 mm to 5 mm. By setting the upper limit values of d1 and d2 to be equal to or greater than 5 mm, contact surface areas between the bases 58, 88 and the gingivae 24, 28 can be ensured to some degree, and force acting on the dental prosthesis system can be distributed. Due to this, the upper limit values of d1 and d2 may be set to any one of 19 mm, 18 mm, 17 mm, 16 mm, 15 mm, 14 mm, 13 mm, 12 mm, 11 mm, 10 mm, 9 mm, 8 mm, 7 mm, 6 mm, and 5 mm. The upper limit values of d1 and d2 may be different from one another.

A broken line B1 in FIG. 2 shows a boundary between the gingiva 24 and an alveolar mucosa 25 (gingiva-alveolar mucosa boundary), and a point P9 in FIGS. 5 and 6 shows a position of the gingiva-alveolar mucosa boundary B1 in the respective first reference cross-sections. The gingiva 24 has immobile nature and is covered by keratosis, and the alveolar mucosa 25 is covered by a non-keratinized mobile mucosa. As shown in FIGS. 2, 5, and 6, the outer edge of the base 58 on the lingual side is preferably located on a facial side than the gingiva-alveolar mucosa boundary B1.

As shown in FIG. 2, centers of incisal edges 60a to 64a, 74a to 78a and centers of occlusal surfaces 66a to 72a, 80a to 86a (see black dots) can be defined for the respective prosthetic teeth 60 to 86 of the dental prosthesis 14 by using the aforementioned definitions. 0 mm < d1 ≤ 20 mm is satisfied in the first reference cross-sections of the incisal portion 60, 62, 74, 76 excluding the canines 64, 78 (that is, the cross sections that include the lines (first reference lines) connecting a middle point C2 of a line connecting centers of the left and right first molars 70, 84 and the centers of the incisal portion 60, 62, 74, 76 respectively, and that are parallel to the plan view direction). Further, 0 mm < d2 ≤ 20 mm is satisfied in the first reference cross-sections of the occlusal portion 66, 68, 72, 80, 82, 86 excluding the first molars 70, 84 (that is, the cross sections that include the lines (first reference lines) connecting the middle point C2 and the centers of the occlusal portion 66, 68, 72, 80, 82, 86 respectively, and that are parallel to the plan view direction). Ranges of upper limit values of d1 and d2 for the dental prosthesis 14 may be set similar to the ranges of the upper limit values of d1 and d2 for the dental prosthesis 12. Further, an outer edge of the base 88 on the lingual side is preferably located on the facial side than a border line B2 between the gingiva 28 and an alveolar mucosa 29 (gingiva-alveolar mucosa boundary).

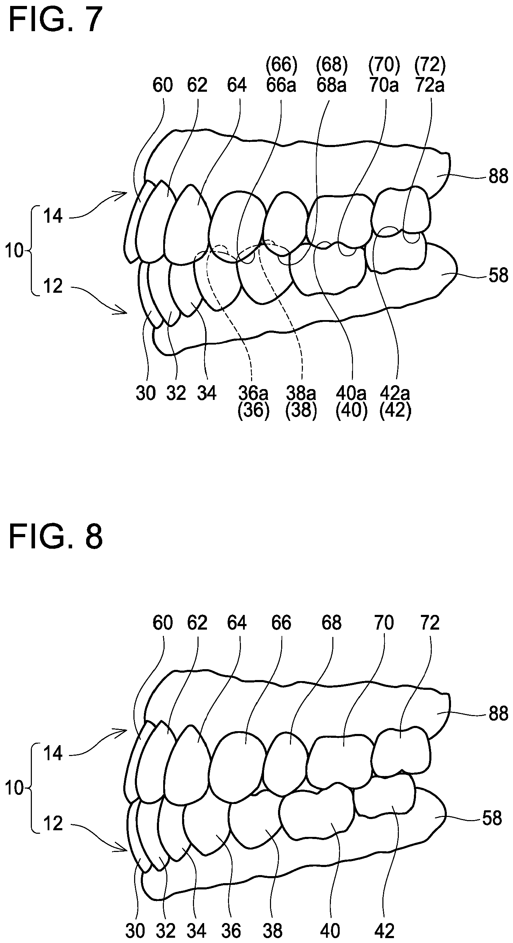

Next, occlusion of the dental prostheses 12, 14 will be described with reference to FIGS. 7 to 9. In FIGS. 7 to 9, the dental prostheses 12, 14 are arranged in the oral cavity of the user (not shown). As shown in FIG. 7, when the dental prostheses 12, 14 of both jaws are in a centric occlusion, the occlusal portion 36 to 42, 50 to 56 (50 to 56 are not shown) of the dental prosthesis 12 is in contact with the occlusal portion 66 to 72, 80 to 86 (80 to 86 are not shown) of the dental prosthesis 14, while on the other hand, the central incisors 30, 44 and the lateral incisors 32, 46 (incisors 44, 46 are not shown) of the dental prosthesis 12 are not in contact with the central incisors 60, 74 and the lateral incisors 62, 76 (incisors 74, 76 are not shown) of the dental prosthesis 14. More specifically, when the dental prostheses 12, 14 are in the centric occlusion, the occlusal surface 36a (50a) contacts the occlusal surface 66a (80a), the occlusal surface 38a (52a) contacts the occlusal surfaces 66a (80a), 68a (82a), the occlusal surface 40a (54a) contacts the occlusal surface 70a (84a), and the occlusal surface 42a (56a) contacts the occlusal surface 72a (86a), respectively, while on the other hand, tooth surfaces of the incisors 30, 32 (44, 46) on the labial side are located on the lingual side relative to tooth surfaces of the incisors 60, 62 (58, 60) on the lingual side, by which a gap is created therebetween.

When a mandible moves forward from this state as shown in FIG. 8, the mandible moves forward in a state where 36 to 42 and 50 to 56 of the dental prosthesis 12 maintain contact respectively with the occlusal portion 66 to 72 and 80 to 86 of the dental prosthesis 14. Conventionally, upon when the mandible starts to move forward from the centric occlusion, it had been considered as that a favorable occlusal exhibits a molar disocclusion by anterior guidance. In this configuration, the central and lateral incisors of both jaws become primary contact surfaces during the forward movement of the mandible, thus there has been a problem that a large occlusal pressure is applied to the central and lateral incisors. However, in the present example, the molar disocclusion does not occur upon when the mandible starts to move forward from the centric occlusion, and the movement continues forward while at least a part of the occlusal portion 36 to 42, 50 to 56 of the dental prosthesis 12 maintains contact respectively with the occlusal portion 66 to 72, 80 to 86 of the dental prosthesis 14. In other words, although the mandible was moving forward conventionally with the maxillary incisors as the guide, with the dental prostheses 12, 14 of the present example, the mandible moves forward with the occlusal portion 66 to 72, 80 to 86 of the dental prosthesis 14 as the guide. Due to this, the occlusal pressure in the forward movement of the mandible can be received by the contact surfaces of the occlusal portions of both jaws as well. According to this configuration, the occlusal pressure acting on the incisors 30, 32, 44, 46, 60, 62, 74, 76 can significantly be reduced, and the occlusal pressure burden can be distributed to respective teeth.

Especially, in this example, the dental prostheses 12, 14 configure a complete dental prosthesis for edentulous jaws. Due to this, the dental prostheses 12, 14, the fixtures 16, and the abutments 18 can be suppressed from being damaged due to a large occlusal pressure acting on the incisors 30, 32, 44, 46, 60, 62, 74, 76. Further, since the mandible moves forward in the state where the occlusal portions are in contact with each other, the dental prosthesis 12 and the dental prosthesis 14 press each other at the contact surfaces in the occlusal portions upon the forward movement of the mandible. Due to this, the dental prostheses 12, 14 can be suppressed from becoming unbalanced or detached (tip over) upon the forward movement of the mandible. In this example, an example that improves the occlusion when the mandible moves forward from the centric occlusion, with the centric occlusion as a reference, is described, however, the technique disclosed herein is not limited to such an example. For example, with a centric relation as the reference, occlusion upon when the mandible moves forward from the centric relation may be improved.

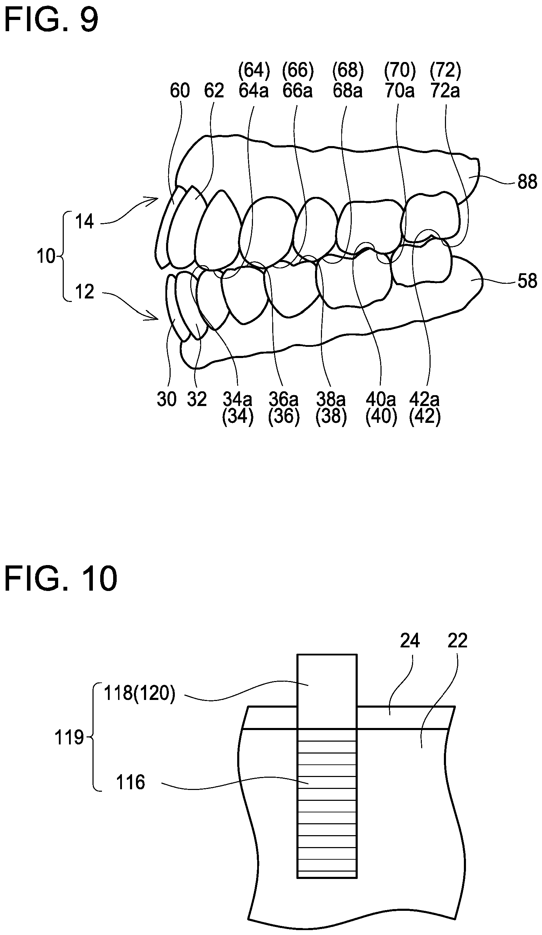

Further, as shown in FIG. 9, in a state where the mandible moves laterally (leftward in FIG. 9) and the canine 34 of the dental prosthesis 12 is brought into contact with the canine 64 of the dental prosthesis 14, at least a part of the occlusal portion 36 to 42 on a left side of the dental prosthesis 12 (on a moving direction side of the mandible) contacts the occlusal portion 66 to 72 of the dental prosthesis 14 on the moving direction side. That is, in the present example, the mandible moves laterally in a state of maintaining contact between the occlusal portion 36 to 42 and the occlusal portion 66 to 72. This is realized by setting a tilt of the incisal edges of the canines 34, 64 milder than a conventional configuration. By configuring as above, both jaws do not separate as in the conventional configuration in the plan view direction (that is, the molar disocclusion does not occur) even when the incisal edges 34a, 64a of the canines 34, 64 contact each other. In the conventional canine guidance, only the canines of both jaws contact upon when the mandible moves laterally and the occlusal portions separate from each other, and thus there has been a problem that a large occlusal pressure acts on the mandibular canine. However, in this example, the occlusal portion 36 to 42 of the dental prosthesis 12 contacts the occlusal portion 66 to 72 of the dental prosthesis 14 in the state where the mandible moves leftward and the canines 34, 64 of the dental prostheses 12, 14 contact each other. Due to this, the occlusal pressure in the state where the mandible moves leftward and the canines 34, 64 of both jaws contact can be received also by the contact surfaces of the occlusal portions of both jaws. According to this configuration, the occlusal pressure acting on the canines 34, 64 can be reduced significantly, and the occlusal pressure burden can be distributed to respective teeth.

Especially, in this example, the dental prostheses 12, 14 configure the complete dental prosthesis for the edentulous jaws. Due to this, the dental prosthesis 12 and the dental prosthesis 14 press each other at the contact surfaces in the occlusal portions upon leftward movement of the mandible. Thus, the dental prosthesis 12 can be suppressed from becoming unbalanced or tipped over upon the movement of the mandible. Further, in this example, the fixtures 16 are planted in the alveolar bones 22, 26 at the portions corresponding to the canines 34, 64. Due to this, with the occlusal pressure acting on the canines 34, 64 being reduced, a large occlusal pressure can be suppressed from acting on the fixtures 16 and the abutments 18 corresponding thereto, and durability thereof can be improved.

The right canines 48, 78 are also configured with a milder tilt in the incisal edges, similar to the left canines 34, 64. Due to this, the molar disocclusion does not occur even in a state where the mandible moves rightward and the canine 48 comes into contact with the canine 78, and at least one or more of the molars 50 to 56 is in contact with the molars 80 to 86. In this case as well, same effect as the above configuration is achieved.

In this example, the mandible is moved forward or laterally in the state of having the dental prostheses 12, 14 arranged inside the oral cavity of the user, however, a moving method of the mandible is not limited to the above. For example, a moving method in which the dental prostheses 12, 14 are attached to an articulator, and the dental prosthesis 12 is moved relative to the dental prosthesis 14 may be employed.

An advantageous effect of the dental prosthesis system 1 according to the first example will be described. Conventionally, an overdenture was considered as a limit of a size of the dental prosthesis on the lingual side. However, as a result of a keen study conducted by the inventor, it has been found that the size of the dental prosthesis (bases 58, 88) on the lingual side can further be reduced. Specifically, in a study conducted regarding the wearing comfortability by gradually shortening lengths of d1 and d2 in first reference cross-sections, it has been found that the comfortability significantly improves when d1 and d2 are 20 mm. The dental prosthesis system 1 is designed so that the position of the outer edge of the base 58 on the lingual side and the position of the outer edge of the base 88 on the lingual side satisfy 0 mm < d1 ≤ 20 mm and 0 mm < d2 ≤ 20 mm. Due to this, as compared to the conventional overdenture (see FIG. 24), the wearing comfortability can significantly be improved. Especially in the dental prosthesis system 1 according to the first example, the outer edges of the bases 58, 88 of the dental prostheses 12, 14 are located on the facial side than the gingiva-alveolar mucosa boundary B1. Due to this, the wearing comfortability can further be improved.

Further, the dental prosthesis system 1 according to the first example constitutes the bases 58, 88 respectively having the contact surfaces 58a, 88a by nylon. Nylon has a relatively high elasticity. Due to this, when the occlusal pressure acts on the prosthetic teeth, the occlusal pressure can suitably be absorbed by the bases 58, 88 being thereby warped. As a result, the occlusal pressure transmitted to the fixtures 16 and the abutments 18 can be reduced, and the durability of these members can be improved.

An occlusal scheme which the dental prosthesis system 1 according to the first example employed is an occlusal scheme for the case where the mandible moves laterally or forward from the centric occlusion, however, occlusal schemes disclosed herein is not limited thereto. In addition to the occlusal scheme employed in the first example, a smooth contact that is distributed over plural teeth in the mandible and with minimal interference may be achieved in cases where the incisal and occlusal portions are at an edge-to-edge occlusion, or reach an anterior overbite by going further therebeyond (that is, upon various occlusal motions in a movable range of the mandible). Due to this, the dental prostheses 12, 14 (so-called superstructures) of the dental prosthesis system 1 may be stabilized on both upper and lower sides, whereby they become resistant against tip-over and breakage, and the occlusal pressure on a specific fixture 16 (which may be a remaining tooth or an abutment tooth in a case where there exists such a remaining tooth or an abutment tooth) may be reduced.

In the dental prosthesis system 1 according to the first example as described above, seven prosthetic teeth are arranged on each of left and right sides of the maxilla, and seven prosthetic teeth are arranged on each of left and right sides of the mandible, however, the technique according to the description herein is not limited to such an example. For example, depending on a situation within the oral cavity of the user, the prosthetic teeth arranged on each of left and right sides of the maxilla and the mandible may be set to a number that is less than seven. That is, six or five prosthetic teeth may be arranged on each of left and right sides of the maxilla and the mandible.

### (Variant 1)

A variant 1 will be described with reference to FIG. 10. Hereinbelow, only features that differ from the first example will be described, and configurations similar to the first example will be omitted of their detailed description. The same applies to other examples and variants. In the first example, the fixtures 16 and the abutments 18 are separate members (a so-called two-piece structure), however, the variant 1 employs an integrated implant 119 (a so-called one-piece structure). As shown in FIG. 10, the implant 119 includes a fixture section 116 and an abutment section 118 integrally configured with the fixture section 116. In the variant 1, the fixture section 116 is planted into the alveolar bone 22 (26). The abutment section 118 includes an exposed part 120 that is exposed from the gingiva 24 (28). The dental prosthesis 12 (14) is configured to be attached to and detached from the implant 119 by the exposed part 120 being engaged with and disengaged from the engagement hole 59 (89) by the user. According to such a configuration as well, similar effect as the first example can be achieved. The implant 119 may employ a known one-piece structured implant.

### (Variant 2)

In the first example, the fixtures 16 are planted as prosthetic dental roots in the alveolar bones 22, 26. However, the dental prostheses 12, 14 may be arranged in an oral cavity of edentulous jaws in which a natural dental root remains. As an example thereof, in the variant 2, a magnet attachment is attached to a natural dental root. The magnet attachment simply needs to have at least a surface thereof exposed from the gingiva. A magnet is attached in the engagement hole of the dental prosthesis. The dental prosthesis is configured to be attached to and detached from the magnet attachment by connecting the exposed part of the magnet attachment to the magnet in the engagement hole by magnetic force and detaching the same by the user. According to such a configuration as well, similar effect as the first example can be achieved. A known structure may be employed as the magnet attachment. Further, a locator attachment may be used instead of the magnet attachment.

### Second Example

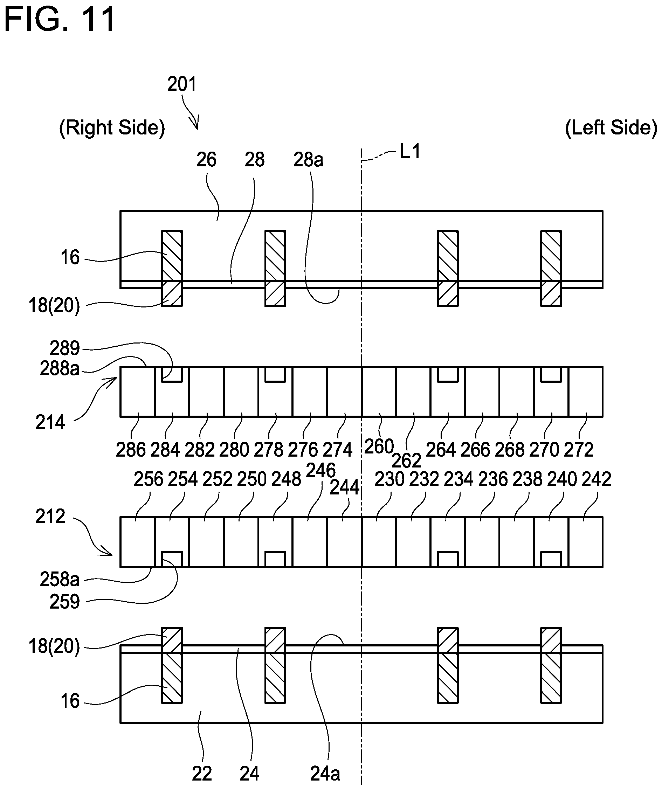

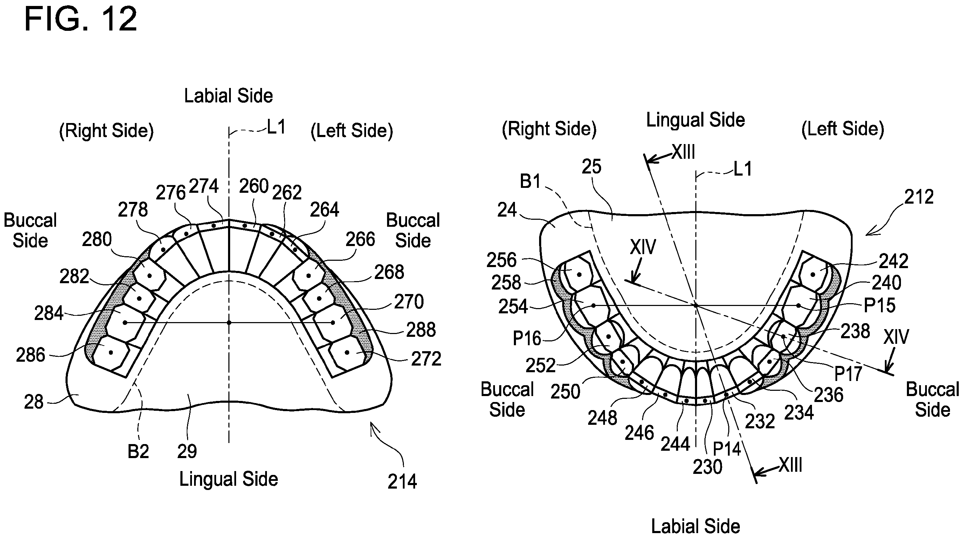

Next, a dental prosthesis system 201 according to a second example will be described with reference to FIGS. 11 to 14. The dental prosthesis system 201 is provided with dental prostheses 212, 214, the fixtures 16, and the abutments 18. As shown in FIGS. 11 and 12, the dental prosthesis 212 has fourteen prosthetic teeth 230 to 256 and a base 258 (see FIG. 12), and the dental prosthesis 214 includes fourteen prosthetic teeth 260 to 286 and a base 288 (see FIG. 12). The prosthetic teeth 230 to 256, 260 to 286 are configured of nylon. In this example, four engagement holes 259 are respectively provided in the prosthetic teeth 234, 240, 248, 254 instead of the base 258, and four engagement holes 289 are respectively provided in the prosthetic teeth 266, 270, 278, 284 instead of the base 288.

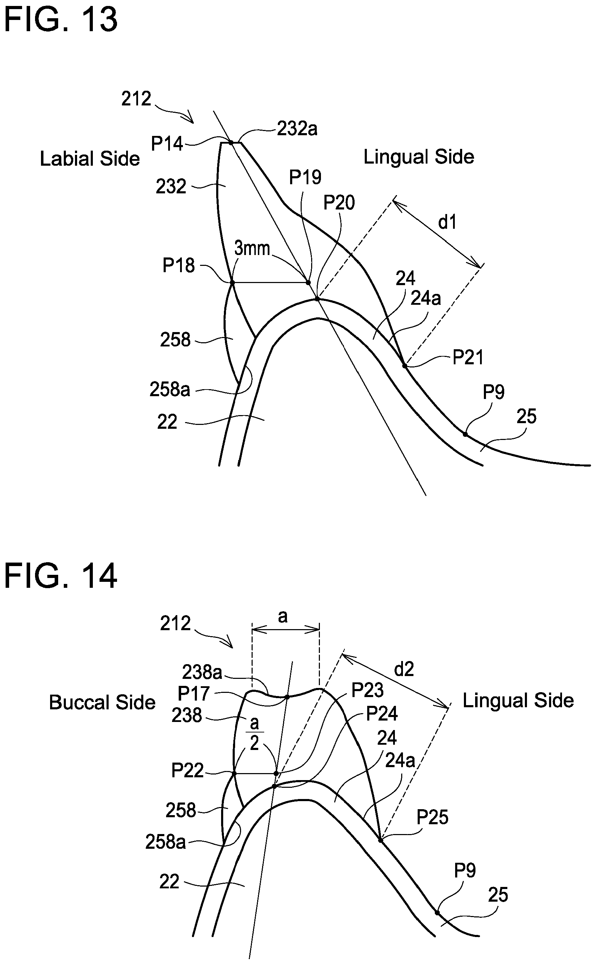

As shown in FIGS. 12 to 14, the bases 258, 288 of this example are arranged only on the facial side, and are not arranged on the lingual side. FIG. 13 shows a first reference cross-section of the lateral incisor 232, and FIG. 14 shows a first reference cross-section of the second premolar 238. In this example, as shown in FIGS. 13 and 14, lower surfaces of the lateral incisor 232 and the second premolar 238 (surfaces on the alveolar bone 22 side) directly contacts the surface 24a of the gingiva 24 without intervention of the base 258. An incurved contact surface 258a of the dental prosthesis 212 is configured of the lower surface of the lateral incisor 232 (second premolar 238) and the lower surface of the base 258. This feature (that the contact surface 258a is configured of the lower surfaces of the prosthetic teeth and the lower surface of the base 258) stands true to an entirety of the dental prosthesis 212.

A point P14 and points P18 to P20 in FIG. 13 comply with the definitions for the point P1 and the points P5 to P7 of the first example. A point P21 is an outer edge of the lateral incisor 232 on the lingual side (which is in other words a boundary of the lateral incisor 232 and the gingiva 24 on the lingual side). The lateral incisor 232 is marginally sealed with respect to the gingiva 24. Further, the outer edge of the lateral incisor 232 on the lingual side is smoothly connected to the surface 24a of the gingiva 24 at the point P21. This feature stands true not only for the first reference cross-section of the lateral incisor 232, but for all the prosthetic teeth 230 to 256. A point P17 and points P22 to P24 in FIG. 14 comply with the definitions for the point P4, and the points P10 to 12 of the first example. A point P25 is an outer edge of the second premolar 238 on the lingual side.

In this example, a position of the outer edge of the lateral incisor 232 on the lingual side is designed so that a distance d1 between the points P20 and P21 (see FIG. 13) satisfies 0 mm < d1 ≤ 20 mm, and a position of the outer edge of the second premolar 238 on the lingual side is designed so that a distance d2 between the points P24 and P25 (see FIG. 14) satisfies 0 mm < d2 ≤ 20 mm. This stands true for the first reference cross-sections of all the prosthetic teeth except for the prosthetic teeth in which the engagement holes 259 are provided. By setting 0 mm < d1 and 0 mm < d2, the dental prosthesis 212 can be fixed to the gingiva 24. Further, by setting d1 ≤ 20 mm and d2 ≤ 20 mm, discomfort upon wearing the dental prosthesis can be significantly reduced as compared to the configuration in which at least one of d1 and d2 is greater than 20 mm. Shorter distances d1, d2 are more preferable. Specifically, upper limits of d1 and d2 may be set as any values so long as they are equal to or less than 20 mm, and may for example be set in a range of 20 mm to 5 mm. By setting the upper limit values of d1 and d2 to be equal to or greater than 5 mm, contact surface areas between the bases and the gingivae can be ensured to some degree, and force acting on the dental prosthesis system can be distributed. Due to this, the upper limit values of d1 and d2 may be set to any one of 19 mm, 18 mm, 17 mm, 16 mm, 15 mm, 14 mm, 13 mm, 12 mm, 11 mm, 10 mm, 9 mm, 8 mm, 7 mm, 6 mm, and 5 mm. Further, outer edges of the respective prosthetic teeth 230 to 256 on the lingual side are preferably located on the facial side than the gingiva-alveolar mucosa boundary B1. Since the dental prosthesis 214 has substantially similar configuration as the dental prosthesis 212, the description thereof will be omitted. The point P20 corresponds to an example of the "first point", and the point P24 corresponds to an example of the "second point".

According to this configuration as well, similar effect as the first example can be achieved. That is, in this example, a position of an outer edge of the dental prosthesis 212 on the lingual side (that is, the positions of the outer edges of the prosthetic teeth 230 to 256 on the lingual side) and a position of an outer edge of the dental prosthesis 214 on the lingual side (that is, the positions of the outer edges of the prosthetic teeth 260 to 286 on the lingual side) are designed to satisfy 0 mm < d1 ≤ 20 mm and 0 mm < d2 ≤ 20 mm. Due to this, the wearing comfortability can be improved significantly as compared to the conventional overdenture (see FIG. 24).

Further, the dental prostheses 212, 214 of this example can be used especially in a case where absorbed degrees of the alveolar bones 22, 26 are light (case where heights of the alveolar bones 22, 26 are high). That is, the alveolar bones 22, 26 are absorbed by aging and tooth extraction, and their heights become lower (which is in other words, tilts of alveolar borders thereof become moderate). In such a case, lengths from an alveolar ridge (apex of the alveolar border) to occlusal surfaces become longer, and a base becomes necessary underneath the prosthetic teeth. Further, when the tilts of the alveolar borders are moderate, sizes of the bases on the lingual side need to be increased by a corresponding amount. However, in this example, since the heights of the alveolar bones 22, 26 are high, and lengths from the alveolar ridge to the occlusal surfaces do not change so much from lengths of the natural teeth, and bases do not need to be provided underneath the prosthetic teeth. Further, since the tilts of the alveolar borders are steep, by which the sizes of the dental prostheses can be reduced. In such a case, since cosmetic superiority is not required so much on the lingual side, the dental prosthesis may be configured by the prosthetic teeth instead of the base. On the other hand, a base for a cosmetic purpose is provided on the facial side to account for the cosmetic superiority. That is, according to the configuration of the present example, the sizes of the dental prostheses 212, 214 on the lingual side can further be reduced.

In this example, the prosthetic teeth are constituted of nylon, however, no limitation is made to this configuration. For example, upper portions of the prosthetic teeth 230 to 256 (portions on the incisal edge and occlusal surface sides) may be constituted of porcelain, and lower portions thereof (portions on a base end side) may be constituted of nylon. The same applies to the prosthetic teeth 260 to 286. In other words, so long as the contact surfaces 258a, 288a of the dental prostheses 212, 214 are constituted of a material having a relatively high elasticity (typically, a material having a Young's modulus of 70 to 267kgf/mm⁻²), other portions may be constituted of another material suitable for the prosthetic teeth. Further, the implant 119 in the variant 1 may be applied to this example.

### Third Example

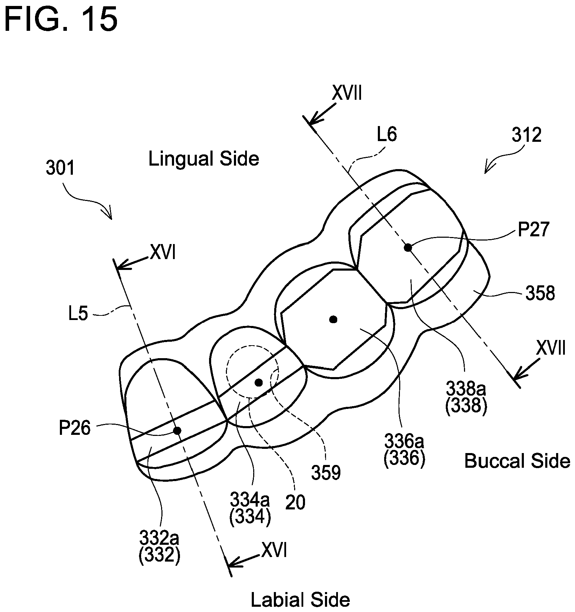

A dental prosthesis system 301 will be described with reference to FIGS. 15 to 17. The dental prosthesis system 301 is provided with a dental prosthesis 312, a fixture (not shown), and an abutment (not shown) including an exposed part 20 (see a broken line portion in FIG. 15). The dental prosthesis 312 is a mandibular partial dental prosthesis, and is used in cases where natural crowns or prosthetic crowns partially remain on the mandible. The prosthetic crowns include not only crowns connected to prosthetic roots, but also crowns connected to the natural dental roots. Since a maxillary partial dental prosthesis has a substantially similar configuration as the dental prosthesis 312, a description thereof will be omitted below. The same applies to fourth to sixth examples. The dental prosthesis 312 includes one engagement hole 359 (see a broken line portion in FIG. 15) at a position corresponding to a canine 334a (described later). In a plan view of the dental prosthesis 312, the exposed part 20 of the abutment is exposed from the gingiva (not shown) at a position corresponding to the engagement hole 359. The dental prosthesis 312 is fixed to the gingiva by the exposed part 20 of the abutment being engaged with the engagement hole 359.

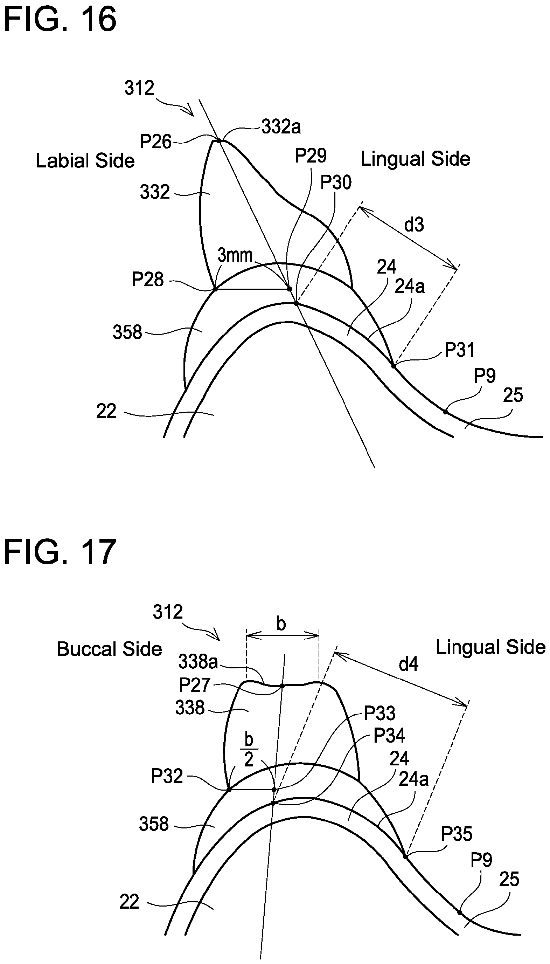

The dental prosthesis 312 is provided with a lateral incisor 332, a canine 334, a first premolar 336, a second premolar 338 as its four prosthetic teeth, and a base 358 adhered beneath the prosthetic teeth. Centers of incisal edges 332a, 334a and occlusal surfaces 336a, 338a of the prosthetic teeth 332 to 338 can be identified similar to the first example. A line L5 in FIG. 15 is a line connecting a middle point of a lingual-side line of the incisal edge 332a and a middle point of a labial-side line thereof. The line L5 is an example of a second reference line. Second reference lines can be identified for the prosthetic teeth in an incisal portion by a similar method of identification as the line L5. A line L6 in FIG. 15 is a line connecting a middle point of a lingual-side line of the occlusal surface 338a and a middle point of a labial-side line thereof. The line L6 is an example of the second reference line. Second reference lines can be identified for the prosthetic teeth in an occlusal portion by a similar method of identification as the line L6. FIG. 16 shows a second reference cross-section of the lateral incisor 332 (which is a cross section including the line L5 and parallel to the plan view direction), and FIG. 17 shows a second reference cross-section of the second premolar 338 (which is a cross section including the line L6 and parallel to the plan view direction). A point P26 and points P28 to P31 in FIG. 16 comply with the definitions of P1 and the points P5 to P8 of the first example. A point P27 and points P32 to P35 in FIG. 17 comply with the definitions of the point P4 and the points P10 to 13 of the first example (in this example, a buccolingual diameter of the occlusal surface 338a is denoted as "b"). The point P30 corresponds to an example of a "third point", and the point P34 corresponds to an example of a "fourth point".

In this example, a position of an outer edge of the base 358 is designed so that a distance d3 between the points P30 and P31 (see FIG. 16) satisfies 0 mm < d3 ≤ 20 mm, and a distance d4 between the points P34 and P35 (see FIG. 17) satisfies 0 mm < d4 ≤ 20 mm. This stands true for the second reference cross-sections of all the prosthetic teeth except for the prosthetic tooth in which the engagement hole 359 is provided. By setting 0 mm < d3 and 0 mm < d4, the dental prosthesis 312 can be fixed to the gingiva 24. Further, by setting d3 ≤ 20 mm and d4 ≤ 20 mm, discomfort upon wearing the dental prosthesis can be significantly reduced as compared to a configuration in which at least one of d3 and d4 is greater than 20 mm. Shorter distances d3, d4 are more preferable. Specifically, upper limits of d3 and d4 may be set as any values so long as they are equal to or less than 20 mm, and may for example be set in a range of 20 mm to 5 mm. By setting the upper limit values of d3 and d4 to be equal to or greater than 5 mm, a contact surface area between the base and the gingiva can be ensured to some degree, and force acting on the dental prosthesis system can be distributed. Due to this, the upper limit values of d3 and d4 may be set to any one of 19 mm, 18 mm, 17 mm, 16 mm, 15 mm, 14 mm, 13 mm, 12 mm, 11 mm, 10 mm, 9 mm, 8 mm, 7 mm, 6 mm, and 5 mm. Further, the outer edge of the base 358 is preferably located on the facial side than the gingiva-alveolar mucosa boundary B1 (which is point P9 in FIGS. 16 and 17). According to such a configuration as well, similar effect as the first example can be achieved. The dental prosthesis may be configured to include only an incisal portion or an occlusal portion. Further, the implant 119 of the variant 1 may be applied to this example.

### Fourth Example

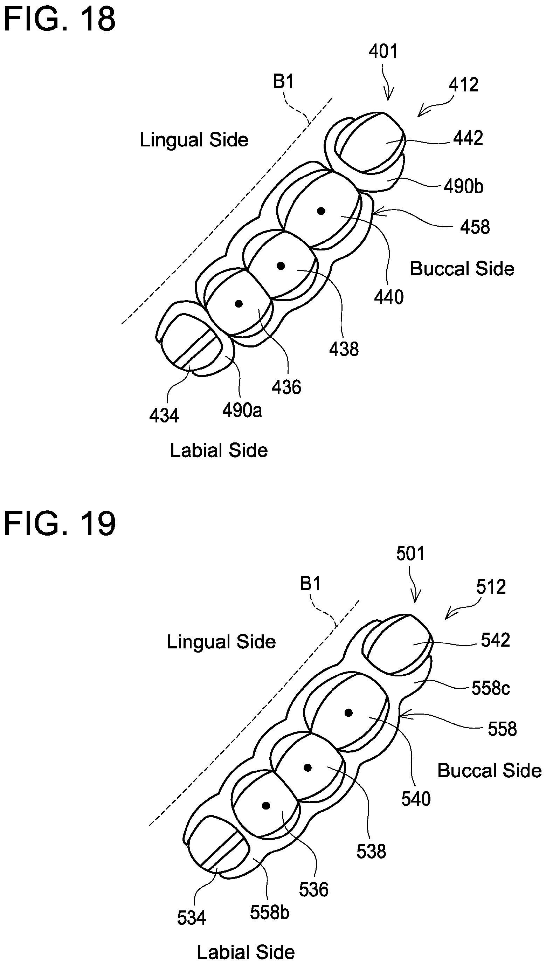

A dental prosthesis system 401 according to a fourth example will be described with reference to FIG. 18. The dental prosthesis system 401 is provided with a dental prosthesis 412, a natural canine 434 and a natural second molar 442. The dental prosthesis 412 is a mandibular partial dental prosthesis configured to be detachable. The dental prosthesis 412 is provided with a first premolar 436, second premolar 438, and a first molar 440 as its three prosthetic teeth, and a base 458 adhered beneath the prosthetic teeth. The base 458 includes metal clasps 490a, 490b on its both ends. The dental prosthesis 412 is fixed on the gingiva (not shown) between the natural canine 434 and the natural second molar 442 by engaging the clasp 490a to the natural canine 434 and the clasp 490b to the natural second molar 442. 0 mm < d4 ≤ 20 mm is satisfied in a second reference cross-section (not shown) of each of the prosthetic teeth 436 to 440. Further, in a case where the dental prosthesis 412 includes an artificial incisal portion, a position of an outer edge of the base 458 is designed to satisfy 0 mm < d3 ≤ 20 mm in the second reference cross-section (not shown) of the incisal portion. The canine 434 and the second molar 442 correspond to examples of an "abutment tooth".

According to this configuration as well, similar effect as the third example can be achieved. Further, the present example fixes the dental prosthesis 412 only by the clasps 490a, 490b on the respective ends, however, no limitation is made to this configuration. For example, an engagement hole may be provided in the dental prosthesis 412, and an exposed part of the abutment may be engaged therewith to further increase fixing force of the dental prosthesis 412. Further, the base 458 may be configured to include only one of the clasps 490a, 490b. Further, the abutment tooth may be a prosthetic crown (the same applies to fifth and sixth examples).

### Fifth Example

A dental prosthesis system 501 according to a fifth example will be described with reference to FIG. 19. The dental prosthesis system 501 is provided with a dental prosthesis 512 configured to be detachable, a natural canine 534, and a natural second molar 542. The dental prosthesis 512 differs from the dental prosthesis 412 according to the fourth example in that a base 558 thereof includes wings 558b, 558c integrally formed with the base 558 at its both ends. The dental prosthesis 512 is fixed on the gingiva (not shown) by engaging the wing 558b to the natural canine 534 and engaging the wing 558c to the natural second molar 542. 0 mm < d4 ≤ 20 mm is satisfied in a second reference cross-section (not shown) of each of the prosthetic teeth 536 to 540. Further, in a case where the dental prosthesis 512 includes an artificial incisal portion, a position of an outer edge of the base 558 is designed to satisfy 0 mm ≤ d3 ≤ 20 mm in the second reference cross-section (not shown) of the incisal portion. The canine 534 and the second molar 542 correspond to examples of the "abutment tooth".

According to this configuration as well, similar effect as the third example can be achieved. Further, an engagement hole may be provided in the dental prosthesis 512, and an exposed part of the abutment may be engaged therewith to further increase fixing force of the dental prosthesis 512. Further, the base 558 may be configured to include only one of the wings 558b, 558c.

### Sixth Example

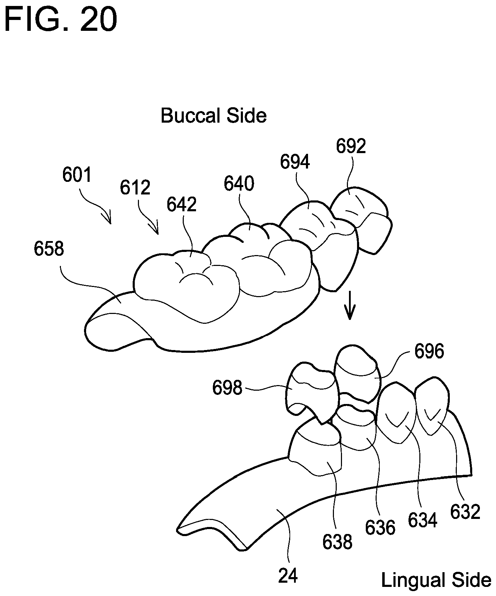

A dental prosthesis system 601 according to a sixth example will be described with reference to FIG. 20. The dental prosthesis system 601 is provided with a dental prosthesis 612 configured to be detachable, a natural first premolar 636, and a natural second premolar 638. The dental prosthesis 612 is a mandibular Konus type partial dental prosthesis. The dental prosthesis 612 includes a first molar 640 and a second molar 642 as its two prosthetic teeth, a base 658 adhered beneath the prosthetic teeth, and two outer crowns 692, 694. As shown in FIG. 20, the mandible has four natural teeth remaining, namely a lateral incisor 632, a canine 634, the first premolar 636, and the second premolar 638. Among them, the natural molars 636, 638 have inner crowns 696, 698 adhered thereto by cement. The dental prosthesis 612 is fixed on the gingiva 24 by frictional force generated when the outer crowns 692, 694 of the dental prosthesis 612 are fitted onto the inner crowns 696, 698. 0 mm ≤ d4 ≤ 20 mm is satisfied in a second reference cross-section (not shown) of each of the prosthetic teeth 640, 642. Further, in a case where the dental prosthesis 612 includes an artificial incisal portion, a position of an outer edge of the base 658 is designed to satisfy 0 mm ≤ d3 ≤ 20 mm in the second reference cross-section (not shown) of the incisal portion. The natural molars 636, 638 correspond to examples of the "abutment tooth".

Specific examples of the present invention have been described in detail, however, these are mere exemplary indications and thus do not limit the scope of the claims. The art described in the claims includes modifications and variations of the specific examples presented above.

For example, the feature in the occlusion described with reference to FIGS. 7 to 9 in the first example may be applied to a configuration other than the one in which the dental prostheses are arranged on both jaws (such as to a configuration in which a dental prosthesis is arranged on only one of the jaws). Further, the dental prosthesis is not limited to the complete dental prosthesis, and may be a partial dental prosthesis. That is, the feature of the occlusion as above may be applied to cases where the natural crowns or prosthetic crowns other than the dental prosthesis remain.

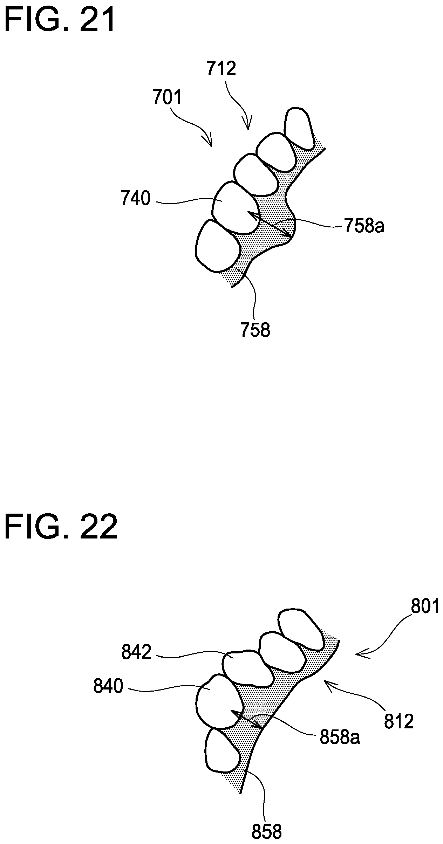

Further, in the dental prosthesis systems of the aforementioned examples, the distance d of the dental prosthesis (specifically, d1, d2, d3, and d4) is configured to be equal to or less than 20 mm for each of the prosthetic teeth, however, the dental prosthesis system disclosed herein is not limited to such configurations. For example, as shown in FIGS. 21 and 22, positions of outer edges of bases 758, 858 may be located at positions which are d > 20 mm in one or more of the prosthetic teeth 740, 840, 842. That is, in a dental prosthesis system 701 shown in FIG. 21, the position of the outer edge of the dental prosthesis 758 is set to d > 20 mm for the prosthetic teeth 740 (at a position indicated by an arrow 758a). A case where the distance d is set greater than 20 mm includes a case where the alveolar bone is absorbed due to a tooth loss at an early life stage, by which a bone defect is generated, for example. In a case where a part of a bone is defected, it is not desirable from viewpoints of maintaining occlusal force, prevention of entry of food residues, and strength of the dental prosthesis to configure the base so that the distance d becomes equal to or less than 20 mm at such a defected portion. There also may be a case where the distance d is clinically set greater than 20 mm due to specific bone eminence or retraction.

Alternatively, as in a dental prosthesis system 801 shown in FIG. 22, in a case where there is a buccolingual malposition in a teeth arrangement of antagonistic teeth (not shown) with which the dental prosthesis system 801 occludes, positions of respective prosthetic teeth in the dental prosthesis system 801 are arranged to correspond to positions of the antagonistic teeth. In such a case, as shown in FIG. 22, prosthetic teeth 840, 842 are arranged by being offset to the buccal side, by which the distance d of the base for those portions (portion indicated by an arrow 858a) is provided by exceeding 20 mm. In the dental prosthesis systems 701, 801 shown in FIGS. 21, 22, the distance d of the base exceeds 20 mm in some of their prosthetic teeth 740, 840, 842, however, the distance d is set to be equal to or less than 20 mm for other prosthetic teeth. Due to this, as compared to the conventional dental prosthesis system, the wearing comfortability can be improved by far. There are various other cases, aside from the above cases, of setting the distance d of the base greater than 20 mm. For example, as shown in FIG. 23, in a case where an implant position P of an implant body is provided by being offset in the lingual side, the distance d of the base 870 at this portion may be set to exceed 20 mm. Further, a number of the prosthetic teeth having the distance d of the base exceeding 20 mm may not be limited to one or two, and the distance d may exceed 20 mm for a larger number of prosthetic teeth. It is preferable to suppress the number of the prosthetic teeth of which distance d exceeds 20 mm (portions where the distance d exceeds 20 mm) to about 1/3 of a total number of the prosthetic teeth. As described above, a prosthetic tooth having the distance d of the base exceeding 20 mm may occur due to early-stage tooth loss or bone abnormalities, however, by setting the number of such prosthetic teeth to about 1/3 of the total number of the prosthetic teeth, the comfortability for the user can be maintained high. For example, in the case where the dental prosthesis is a complete dental prosthesis for an edentulous jaw, the distance d may exceed 20 mm for 1/3 of fourteen teeth, being the total number of the prosthetic teeth, that is, four to five prosthetic teeth. Further, in the case where the dental prosthesis is a partial dental prosthesis and the total number of the prosthetic teeth is four, the distance d may exceed 20 mm in one or two prosthetic teeth.

## Claims

1. A dental prosthesis system (1) configured to be detachably worn by a user, the system comprising a dental prosthesis (10, 12, 14) including prosthetic teeth (30-42, 44-56, 60-72, 74-86) that resemble outer appearances of natural teeth, wherein
the dental prosthesis (10, 12, 14) is a complete dental prosthesis for an edentulous jaw, and includes an incurved contact surface (58a, 88a) configured to contact a gingiva (24, 28) of the user when the dental prosthesis (10, 12, 14) is arranged inside an oral cavity of the user, and
following relationships are established in first reference cross-sections including first reference lines (L3, L4), which are lines connecting a middle point (C1, C2) of a line that connects centers (P2, P3) of occlusal surfaces (40a, 54a, 70a, 84a) of left and right first molars (40, 54, 70, 84) in a plan view and centers (P1, P4) of incisal edges (30a-34a, 44a-48a, 60a-64a, 74a-78a) or occlusal surfaces (36a-42a, 50a-56a, 66a-72a, 80a-86a) of the respective prosthetic teeth (30-42, 44-56, 60-72, 74-86):
for at least one prosthetic tooth (32) in an incisal teeth portion (30, 32, 34, 44, 46, 48, 60, 62, 64, 74, 76, 78), a distance d1 between a first point (P7) and an outer edge (P8) of the dental prosthesis on a lingual side satisfies d1 ≤ 20 mm,
wherein the first point (P7) is an intersection of the incurved contact surface (58a) and a line connecting the center (P1) of the incisal edge (32a) of the one prosthetic tooth (32) and a position (P6) that is offset, in a direction parallel to the first reference line (L3) of the one prosthetic tooth (32), to the lingual side by 3 mm from a base end point (P5) of a tooth surface of the one prosthetic tooth (32) on a labial side; and
for at least one prosthetic tooth (38) in an occlusal teeth portion (36, 38, 40, 42, 50, 52, 54, 56, 66, 68, 70, 72, 80, 82, 84, 86), a distance d2 between a second point (P12) and the outer edge (P13) of the dental prosthesis on the lingual side satisfies d2 ≤ 20 mm,
wherein the second point (P12) is an intersection of the incurved contact surface (58a) and a line connecting the center (P4) of the occlusal surface (38a) of the one prosthetic tooth (38) and a position (P11) that is offset, in the direction parallel to the first reference line (L4) of the one prosthetic tooth (38), to the lingual side by a/2 a being a buccolingual diameter of the one prosthetic tooth (38) in the corresponding first reference cross-section from a base end point (P10) of a tooth surface of the one prosthetic tooth (38) on a buccal side,
the dental prosthesis (10, 12, 14) is configured such that in a case where the dental prosthesis (10, 12, 14) is arranged in the oral cavity of the user and is in a centric occlusion or a centric relation, at least a part of a mandibular occlusal teeth portion (36-42, 50-56) is contactable to a maxillary occlusal teeth portion (66-72, 80- 86) while mandibular central and lateral incisors (30, 44, 32, 46) do not contact maxillary central and lateral incisors (60, 74, 62, 76), and
the dental prosthesis (10, 12, 14) is configured such that upon when a mandible starts to move forward from a state of being in the centric occlusion or the centric relation, at least the part of the mandibular occlusal teeth portion (36-42, 50-56) is movable forward in a state of maintaining contact with the maxillary occlusal teeth portion (66-72, 80- 86).

2. The dental prosthesis system (1) according to claim 1, wherein
the dental prosthesis (10, 12, 14) is configured such that in a state where the dental prosthesis (10, 12, 14) is arranged in the oral cavity of the user and a mandible moves laterally by which a mandibular canine (34, 48) contacts a maxillary canine (64, 78), at least a part of the mandibular occlusal teeth portion (36-42, 50-56) on a moving direction side contacts the maxillary occlusal teeth portion (66-72, 80- 86) on the moving direction side.

3. The dental prosthesis system (1) according to claim 1 or 2, wherein
at least a portion of the dental prosthesis (10, 12, 14) where the incurved contact surface (58a, 88a) is to be provided is constituted of a material having Young's modulus of 70 to 267kgf/mm⁻².

4. The dental prosthesis system (1) according to any one of claims 1 to 3, further comprising:
a fixture (16) plantable in an alveolar bone (22, 26); and
an abutment (18) connectable to the fixture (16) and including an exposed part (20) that is exposable from the gingiva (24, 28) covering the alveolar bone (22, 26),
wherein the dental prosthesis (10, 12, 14) includes an engagement hole (59, 89) which the exposed part (20) of the abutment (18) is configured to engage, and
the dental prosthesis (10, 12, 14) is configured to be attached to and detached from the abutment (18) by the exposed part (20) being engageable with the engagement hole (59, 89) and disengageable therefrom by the user.

5. The dental prosthesis system (1) according to any one of claims 1 to 3, further comprising:
an implant (119) that comprises a fixture section (116) plantable in an alveolar bone (22), and an abutment section (118) configured integrally with the fixture section (116) and including an exposed part (120) that is exposable from the gingiva covering the alveolar bone,
wherein the dental prosthesis (10, 12, 14) includes an engagement hole to which the exposed part (120) of the abutment section (118) is configured to engage, and
the dental prosthesis (10, 12, 14) is configured to be attached to and detached from the abutment section (118) by the exposed part (120) being engageable with the engagement hole and disengageable therefrom by the user.

6. The dental prosthesis system (1) according to any one of claims 1 to 3, further comprising:
an attachment attached to a natural dental root and including an exposed part that is exposeable from the gingiva (24, 28) covering the alveolar bone (22, 26),
wherein the dental prosthesis (10, 12, 14) includes an engagement hole to which the exposed part of the attachment is configured to engage, and
the dental prosthesis (10, 12, 14) is configured to be attached to and detached from the attachment by the exposed part being engageable with the engagement hole and disengageable therefrom by the user.

## Patentansprüche

1. Zahnprothesensystem (1), zum abnehmbaren Tragen durch einen Benutzer, umfassend eine Zahnprothese (10, 12, 14), wobei die Zahnprothese (10, 12, 14) Prothesenzähne (30-42, 44-56, 60-72, 74-86) umfasst, die dem äußeren Erscheinungsbild natürlicher Zähne ähneln, wobei
die Zahnprothese (10, 12, 14) eine vollständige Zahnprothese (10, 12, 14) für einen zahnlosen Kiefer ist und eine gekrümmte Kontaktfläche (58a, 88a) umfasst, die derart ausgebildet ist, dass sie eine Gingiva (24, 28) des Benutzers berührt wenn die Zahnprothese (10, 12, 14) in einer Mundhöhle des Benutzers angeordnet ist, und
die folgenden Beziehungen in ersten Referenzquerschnitten hergestellt werden, einschließlich erster Referenzlinien (L3, L4), wobei die Referenzlinien einen Mittelpunkt (C1, C2) einer Linie zwischen den Zentren (P2, P3) der Okklusionsflächen (40a, 54a, 70a, 84a) der linken und rechten ersten Molaren (40, 54, 70, 84) in einer Draufsicht und die Mittelpunkte (P1, P4) der Schneidekanten (30a-34a, 44a-48a, 60a-64a, 74a-78a) oder der Kauflächen (36a-42a, 50a-56a, 66a-72a, 80a-86a) der jeweiligen Prothesenzähne (30-42, 44-56, 60-72, 74-86) verbinden:
für mindestens einen Prothesenzahn (32) ist in einem incisalen Zahnabschnitt (30, 32, 34, 44, 46, 48, 60, 62, 64, 74, 76, 78) ein Abstand d1 zwischen einem ersten Punkt (P7) und einer Außenkante (P8) des Zahnersatzes auf einer lingualen Seite d1 ≤ 20 mm erfüllt,
wobei der erste Punkt (P7) ein Schnittpunkt der gekrümmten Kontaktfläche (58a) und einer Linie ist, die die Mitte (P1) der Inzisalkante (32a) des einen Prothesenzahns (32) und eine Position (P6) verbindet, die in einer Richtung parallel zur ersten Referenzlinie (L3) des einen Prothesenzahns (32) zur lingualen Seite um 3 mm von einem Basisendpunkt (P5) einer Zahnoberfläche des einen Prothesenzahns (32) auf einer labialen Seite versetzt ist; und
für mindestens einen Prothesenzahn (38) ist in einem okklusalen Zahnabschnitt (36, 38, 40, 42, 50, 52, 54, 56, 66, 68, 70, 72, 80, 82, 84, 86) ein Abstand d2 zwischen einem zweiten Punkt (P12) und der Außenkante (P13) des Zahnersatzes auf der lingualen Seite d2 ≤ 20 mm erfüllt,
wobei der zweite Punkt (P12) ein Schnittpunkt der gekrümmten Kontaktfläche (58a) und einer Linie ist, die die Mitte (P4) der Okklusionsfläche (38a) des einen Prothesenzahns (38) und eine Position (P11) verbindet, die in der Richtung parallel zur ersten Referenzlinie (L4) des einen Prothesenzahns (38) zur lingualen Seite um a/2 versetzt ist, wobei a ein bukkolingualer Durchmesser des einen Prothesenzahns (38) im entsprechenden ersten Bezugsquerschnitt von einem Basisendpunkt (P10) einer Zahnoberfläche des einen Prothesenzahns (38) auf einer bukkalen Seite ist,
die Zahnprothese (10, 12, 14) derart ausgebildet ist, dass in einem Fall, in dem die Zahnprothese (10, 12, 14) in der Mundhöhle des Benutzers angeordnet ist und sich in einer zentrischen Okklusion oder einer zentrischen Beziehung befindet, zumindest ein Teil eines mandibulären okklusalen Zahnabschnitts (36-42, 50-56) mit einem maxillaren okklusalen Zahnabschnitt (66-72, 80-86) in Kontakt gebracht werden kann, während die mandibularen mittleren und seitlichen Schneidezähne (30, 44, 32, 46) die maxillaren mittleren und seitlichen Schneidezähne (60, 74, 62, 76) nicht berühren, und
die Zahnprothese (10, 12, 14) derart ausgebildet ist, dass wenn ein Unterkiefer beginnt sich aus einem Zustand, in dem er sich in der zentrischen Okklusion oder der zentrischen Beziehung befindet, nach vorne zu bewegen, zumindest der Teil des mandibulären okklusalen Zahnabschnitts (36-42, 50-56) nach vorne bewegbar ist, während der Kontakt mit dem maxillaren okklusalen Zahnabschnitt (66-72, 80- 86) aufrechterhalten wird.

2. Zahnprothesensystem (1) nach Anspruch 1, wobei
die Zahnprothese (10, 12, 14) derart ausgebildet ist, dass in einem Zustand, in dem die Zahnprothese (10, 12, 14) in der Mundhöhle des Benutzers angeordnet ist und ein Unterkiefer sich seitlich bewegt, sodass ein mandibularer Eckzahn (34, 48) einen maxillare Eckzahn (64, 78) berührt, mindestens ein Teil des mandibularen okklusalen Zahnabschnitts (36-42, 50-56) auf der Seite der Bewegungsrichtung den maxillarenokklusalen Zahnabschnitt (66-72, 80- 86) auf der Seite der Bewegungsrichtung berührt.

3. Zahnprothesensystem (1) nach Anspruch 1 oder 2, wobei
mindestens ein Teil der Zahnprothese (10, 12, 14), an dem die gekrümmte Kontaktfläche (58a, 88a) vorgesehen werden soll, aus einem Material mit einem Elastizitätsmodul von 70 bis 267kgf/mm⁻² besteht.

4. Zahnprothesensystem (1) nach einem der Ansprüche 1 bis 3, ferner umfassend:
eine Halterung (16), die in einen Alveolarknochen (22, 26) eingesetzt werden kann; und
ein Verbindungsteil (18), das mit der Halterung (16) verbindbar ist und einen freiliegenden Teil (20) aufweist, der von der den Alveolarknochen (22, 26) bedeckenden Gingiva (24, 28) freigelegt werden kann,
wobei die Zahnprothese (10, 12, 14) ein Eingriffsloch (59, 89) aufweist, welches mit dem freiliegenden Teil (20) des Verbindungsteils (18) in Eingriff gebracht werden kann, und
die Zahnprothese (10, 12, 14) derart konfiguriert ist, dass sie an dem Verbindungsteil (18) befestigt und von diesem gelöst werden kann, indem der freiliegende Teil (20) mit dem Eingriffsloch (59, 89) in Eingriff gebracht werden kann und durch den Benutzer davon gelöst werden kann.

5. Zahnprothesensystem (1) nach einem der Ansprüche 1 bis 3, ferner umfassend:
ein Implantat (119), das einen Halterungsabschnitt (116) umfasst, der in einen Alveolarknochen (22) einpflanzbar ist, und einen Verbindungsabschnitt (118), der einstückig mit dem Halterungsabschnitt (116) ausgebildet ist und einen freiliegenden Teil (120) enthält, der von der den Alveolarknochen bedeckenden Gingiva freigelegt werden kann,
wobei die Zahnprothese (10, 12, 14) ein Eingriffsloch aufweist, in das der freiliegende Teil (120) des Verbindungsabschnitt (118) eingreifen kann, und
die Zahnprothese (10, 12, 14) derart konfiguriert ist, dass sie an dem Verbindungsabschnitt (118) befestigt und von diesem gelöst werden kann, indem der freiliegende Teil (120) mit dem Eingriffsloch (59, 89) in Eingriff gebracht werden kann und durch den Benutzer davon gelöst werden kann.

6. Zahnprothesensystem (1) nach einem der Ansprüche 1 bis 3, ferner umfassend:
ein Fortsatz, der an einer natürlichen Zahnwurzel befestigt ist und einen freiliegenden Teil aufweist, der von der Gingiva (24, 28), die den Alveolarknochen (22, 26) bedeckt, freigelegt werden kann,
wobei die Zahnprothese (10, 12, 14) ein Eingriffsloch aufweist, in das der freiliegende Teil des Fortsatzes eingreifen kann, und
die Zahnprothese (10, 12, 14) derart konfiguriert ist, dass sie an dem Fortsatz befestigt und von diesem gelöst werden kann, indem der freiliegende Teil (120) mit dem Eingriffsloch in Eingriff gebracht werden kann und durch den Benutzer davon gelöst werden kann.

## Revendications

1. Système de prothèse dentaire (1) destiné à être porté de manière amovible par un utilisateur, comprenant une prothèse dentaire (10, 12, 14), la prothèse dentaire (10, 12, 14) comprenant des dents de prothèse (30-42, 44-56, 60-72, 74-86) qui ressemblent à l'apparence extérieure de dents naturelles, dans lequel
la prothèse dentaire (10, 12, 14) est une prothèse dentaire complète (10, 12, 14) pour une mâchoire édentée et comprend une surface de contact incurvée (58a, 88a) configurée pour entrer en contact avec une gencive (24, 28) de l'utilisateur lorsque la prothèse dentaire (10, 12, 14) est placée dans une cavité buccale de l'utilisateur, et
les relations suivantes sont établies dans des premières sections transversales de référence, comprenant des premières lignes de référence (L3, L4), lesdites lignes de référence relient un centre (C1, C2) d'une ligne entre les centres (P2, P3) des surfaces d'occlusion (40a, 54a, 70a, 84a) des premières molaires gauche et droite (40, 54, 70, 84) dans une vue en plan avec les centres (P1, P4) des bords tranchant (30a-34a, 44a-48a, 60a-64a, 74a-78a) ou des surfaces occlusales (36a-42a, 50a-56a, 66a-72a, 80a-86a) des dents prothétiques respectives (30-42, 44-56, 60-72, 74-86) :
pour au moins une dent prothétique (32), dans une partie incisale de la dent (30, 32, 34, 44, 46, 48, 60, 62, 64, 74, 76, 78), une distance d1 entre un premier point (P7) et un bord extérieur (P8) de la prothèse dentaire est satisfaite sur un côté lingual d1 ≤ 20 mm,
dans lequel le premier point (P7) est une intersection de la surface de contact incurvée (58a) et d'une ligne reliant le centre (P1) du bord incisif (32a) de ladite une dent prothétique (32) et une position (P6) qui est décalée de 3 mm d'un point d'extrémité de base (P5) d'une surface de dent de ladite une dent prothétique (32) sur un côté labial dans une direction parallèle à la première ligne de référence (L3) de ladite une dent prothétique (32) ; et
pour au moins une dent prothétique (38), une distance d2 entre un deuxième point (P12) et le bord extérieur (P13) de la prothèse dentaire sur le côté lingual d2 ≤ 20 mm est satisfaite dans une section de dent occlusale (36, 38, 40, 42, 50, 52, 54, 56, 66, 68, 70, 72, 80, 82, 84, 86),
le deuxième point (P12) étant une intersection de la surface de contact incurvée (58a) et d'une ligne reliant le centre (P4) de la surface d'occlusion (38a) de ladite une dent de prothèse (38) et une position (P11) décalée de a/2 dans la direction parallèle à la première ligne de référence (L4) de ladite une dent de prothèse (38) du côté lingual, où a est un diamètre bucco-lingual de ladite une dent de prothèse (38) dans la première section transversale de référence correspondante à partir d'un point d'extrémité de base (P10) d'une surface de dent de ladite une dent de prothèse (38) sur un côté buccal,
la prothèse dentaire (10, 12, 14) est conçue de telle sorte que, dans un cas où la prothèse dentaire (10, 12, 14) est placée dans la cavité buccale de l'utilisateur et se trouve dans une occlusion centrée ou une relation centrée, au moins une partie d'une section occlusale de dent mandibulaire (36-42, 50-56) peut être mise en contact avec une section de dent occlusale maxillaire (66-72, 80-86), tandis que les incisives centrales et latérales mandibulaires (30, 44, 32, 46) ne touchent pas les incisives centrales et latérales maxillaires (60, 74, 62, 76), et
la prothèse dentaire (10, 12, 14) est configurée de telle sorte que lorsqu'une mâchoire inférieure commence à se déplacer vers l'avant à partir d'un état dans lequel elle se trouve dans l'occlusion centrée ou la relation centrée, au moins la partie de la section de dent occlusale mandibulaire (36-42, 50-56) peut être déplacée vers l'avant tout en maintenant le contact avec la section de dent occlusale maxillaire (66-72, 80-86).

2. Système de prothèse dentaire (1) selon la revendication 1, dans lequel
la prothèse dentaire (10, 12, 14) est configurée de telle sorte que, dans un état où la prothèse dentaire (10, 12, 14) est disposée dans la cavité buccale de l'utilisateur et où une mandibule se déplace latéralement, ce qui fait qu'une canine mandibulaire (34, 48) entre en contact avec une canine maxillaire (64, 78), au moins une partie de la portion de dents occlusales mandibulaires (36-42, 50-56) sur un côté de direction de déplacement entre en contact avec la portion de dents occlusales maxillaires (66-72, 80-86) sur le côté de direction de déplacement.

3. Système de prothèse dentaire (1) selon la revendication 1 ou 2, dans lequel
au moins une partie de la prothèse dentaire (10, 12, 14) sur laquelle la surface de contact incurvée (58a, 88a) doit être prévue est constituée d'un matériau ayant un module d'élasticité de 70 à 267kgf/mm⁻².

4. Système de prothèse dentaire (1) selon l'une quelconque des revendications 1 à 3, comprenant en outre :
un support (16) qui peut être inséré dans un os alvéolaire (22, 26) ; et
un pièce de connexion (18) pouvant être connectée au support (16) et ayant une partie exposée (20) qui peut être exposée par la gencive (24, 28) recouvrant l'os alvéolaire (22, 26),
la prothèse dentaire (10, 12, 14) ayant un trou de mise en prise (59, 89) qui peut être mis en prise avec la partie exposée (20) de la pièce de connexion (18), et
la prothèse dentaire (10, 12, 14) est configurée pour être fixée à la pièce de connexion (18) et détachée de celle-ci en permettant à la partie exposée (20) d'être engagée dans le trou d'engagement (59, 89) et d'en être détachée par l'utilisateur.

5. Système de prothèse dentaire (1) selon l'une quelconque des revendications 1 à 3, comprenant en outre :
un implant (119) comprenant une partie de support (116) pouvant être implantée dans un os alvéolaire (22), et une partie de connexion (118) formée d'un seul tenant avec la partie de support (116) et comprenant une partie exposée (120) pouvant être exposée par la gencive recouvrant l'os alvéolaire,
la prothèse dentaire (10, 12, 14) ayant un trou d'engagement dans lequel la partie exposée (120) de la section de connexion (118) peut s'engager, et
la prothèse dentaire (10, 12, 14) est configurée pour être fixée à la partie de connexion (118) et détachée de celle-ci en permettant à la partie exposée (120) d'être engagée dans le trou d'engagement (59, 89) et d'en être détachée par l'utilisateur.

6. Système de prothèse dentaire (1) selon l'une quelconque des revendications 1 à 3, comprenant en outre :
un appendice fixé à une racine de dent naturelle et ayant une partie exposée qui peut être exposée par la gencive (24, 28) recouvrant l'os alvéolaire (22, 26),
la prothèse dentaire (10, 12, 14) ayant un trou d'engagement dans lequel la partie exposée de l'extension peut s'engager, et
la prothèse dentaire (10, 12, 14) est configurée pour être fixée à l'appendice et détachée de celui-ci en permettant à la partie exposée (120) d'être engagée dans le trou d'engagement (59, 89) et d'en être détachée par l'utilisateur.
